(19) Europäisches Patentamt
European Patent Office
Office européen des brevets

(11) **EP 4 163 173 A1**

(12) **EUROPEAN PATENT APPLICATION**
published in accordance with Art. 153(4) EPC

(43) Date of publication:
**12.04.2023 Bulletin 2023/15**

(21) Application number: **21834344.0**

(22) Date of filing: **23.06.2021**

(51) International Patent Classification (IPC):
**B60W 30/095** $^{(2012.01)}$

(52) Cooperative Patent Classification (CPC):
**B60W 30/095**

(86) International application number:
**PCT/CN2021/101765**

(87) International publication number:
**WO 2022/001773 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2020 CN 202010628162**

(71) Applicant: **Huawei Technologies Co., Ltd.**
**Longgang District,**
**Shenzhen,**
**Guangdong 518129 (CN)**

(72) Inventors:
• **CHEN, Pengzhen**
**Shenzhen, Guangdong 518129 (CN)**
• **LI, Fei**
**Shenzhen, Guangdong 518129 (CN)**
• **CHE, Yuhan**
**Shenzhen, Guangdong 518129 (CN)**
• **FAN, Shiwei**
**Shenzhen, Guangdong 518129 (CN)**
• **LI, Xiangxu**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **TRAJECTORY PREDICTION METHOD AND APPARATUS**

(57) A track prediction method and apparatus are provided, to accurately predict a future traveling track of a surrounding vehicle passing through an intersection, so as to improve security of route planning of a vehicle. The method includes: determining moving semantics of a target vehicle and road geometric semantics based on a historical traveling track of the target vehicle, and determining a target virtual lane and a target exit lane with reference to moving information of the target vehicle, to obtain a traveling track of the target vehicle in a first time period. The moving semantics indicates a behavior of the target vehicle, for example, turning left, going straight, turning right, or turning around. The road geometric semantics indicates a traveling rule that is of an exit road and/or a virtual lane included in an intersection at which the target vehicle is located and that is specified by using an entrance road as a reference. The entrance road is an entrance of the intersection at which the target vehicle is located. The moving information includes a moving direction of the target vehicle and a current location of the target vehicle. The first time period is a period of time starting from a next moment of a moment corresponding to the current location of the target vehicle.

```
┌─────────────────────────────────────────┐
│ Determine a historical traveling track   │── S801
│ of a target vehicle based on a location   │
│ of the target vehicle in a second time    │
│ period                                    │
└─────────────────────────────────────────┘
                    ↓
┌─────────────────────────────────────────┐
│ Determine moving semantics of the target │── S802
│ vehicle                                   │
└─────────────────────────────────────────┘
                    ↓
┌─────────────────────────────────────────┐
│ Determine road geometric semantics       │── S803
└─────────────────────────────────────────┘
                    ↓
┌─────────────────────────────────────────┐
│ Obtain a traveling track of the target    │── S804
│ vehicle in a first time period based on    │
│ moving information of the target vehicle,   │
│ the moving semantics, and the road         │
│ geometric semantics                        │
└─────────────────────────────────────────┘
```

FIG. 8

EP 4 163 173 A1

**Description**

This application claims priority to Chinese Patent Application No. 202010628162.5, filed with the China National Intellectual Property Administration on July 2, 2020, and entitled "TRACK PREDICTION METHOD AND APPARATUS", which is incorporated herein by reference in its entirety.

## TECHNICAL FIELD

This application relates to the autonomous driving field, and in particular, to a track prediction method and apparatus.

## BACKGROUND

Vehicle track prediction means that an autonomous driving system of a vehicle analyzes a moving feature of a target vehicle, and obtains a possible moving track of the target vehicle in a future period of time. Accurately predicting a track of another vehicle near the vehicle is an important basis for subsequent safe route planning of the vehicle. In a traffic intersection scenario, because a road structure of an intersection is complex and there is no specific physical lane line constraint, behavior differences of vehicles are more obvious, and it is more difficult to accurately predict a future driving track of another vehicle. A virtual lane line of the intersection is added to a high-precision map in the autonomous driving system, to restrict the vehicle to drive according to the virtual lane line when passing through the intersection. Correspondingly, the autonomous driving system determines the virtual lane line on the high-precision map as a future traveling track of another vehicle at the intersection. However, there are a large quantity of vehicles at the intersection, traffic is complex at the intersection, and it is difficult for another vehicle to travel according to the virtual lane line on the high-precision map. As a result, accuracy of the predicted future traveling track of the another vehicle at the intersection is poor.

In the conventional technology, information collection apparatuses at intersections are used to collect information about traveling vehicles, to obtain passing vehicle information at different time points at a plurality of intersections, for example, license plate numbers, passing time, and intersection codes. Then, a deep belief network (Deep Belief Network, DBN) is used to train the passing vehicle information, to extract a common feature centrally represented by historical tracks of a large quantity of users as a basis for subsequently predicting a track of a vehicle passing through an intersection. In this solution, a structure difference between an intersection at which the vehicle is currently located and an intersection in a data sample is not considered. Therefore, this solution is applicable to only an intersection with a regular intersection structure. When the intersection is an intersection with an irregular structure, applicability of historical sample data is poor. As a result, prediction of a traveling track of the vehicle at the current intersection is inaccurate. Alternatively, a video collection apparatus at an intersection obtains information such as a traffic flow at the intersection and travel time of the vehicle passing through the intersection, to obtain traffic flow data, obtain a moving feature of the vehicle including a straightness and a bending degree, and then match the moving feature of the vehicle with the traffic flow data to predict a future traveling track of the vehicle. However, different pieces of traffic flow data are obtained at intersections with different structures. Therefore, this solution is applicable to only an intersection with a regular intersection structure. When the intersection is an intersection with an irregular structure, applicability of the traffic flow data is poor. As a result, prediction of a traveling track of the vehicle at a current intersection is inaccurate.

Therefore, accurately predicting a future traveling track of a vehicle in a scenario including different intersection structures becomes an urgent problem to be resolved.

## SUMMARY

Embodiments of this application provide a track prediction method and apparatus, to improve accuracy of determining a future traveling track of a surrounding vehicle passing through an intersection, so as to improve security of route planning of a vehicle, and ensure that the vehicle safely passes through an intersection.

To achieve the foregoing objective, this application uses the following technical solutions.

According to a first aspect, a track prediction method is provided. The track prediction method includes: determining moving semantics of a target vehicle, determining road geometric semantics, and obtaining a traveling track of the target vehicle in a first time period based on moving information of the target vehicle, the moving semantics, and the road geometric semantics. The moving semantics indicates a behavior of the target vehicle, and the behavior of the target vehicle includes: turning left, going straight, turning right, or turning around. The road geometric semantics indicates a traveling rule that is of an exit road and/or a virtual lane included in an intersection at which the target vehicle is located and that is specified by using an entrance road as a reference, and the entrance road is an entrance of the intersection at which the target vehicle is located. The moving information includes a moving direction of the target vehicle and a current location of the target vehicle, and the first time period is a period of time starting from a next moment corresponding to a current location of the target vehicle.

According to the track prediction method according to the first aspect, semantic abstraction is performed on the behavior of the target vehicle and road structure information to obtain the moving semantics of the target vehicle and the road geometric semantics, and then the traveling track, namely, a future traveling track, of the target vehicle in the first time period is obtained based on the moving information of the target vehicle, the moving semantics of the target vehicle at the intersection, and the road geometric semantics of the intersection. In this way, different from the conventional technology that depends on historical sample data of a plurality of vehicles at a plurality of intersections, the track prediction method in this application depends on both the moving information and two additional reference elements: the moving semantics of the target vehicle and the road geometric semantics that is of the intersection at which the target vehicle is currently located and that is related to the target vehicle. The intersection is an intersection at which the target vehicle is currently located, and may be an intersection with a regular structure or an intersection with an irregular structure. This application is highly applicable to intersections having different structures, and a future traveling track of a surrounding vehicle passing through the intersection can be accurately predicted. Therefore, security of vehicle path planning can be improved, and the vehicle can pass through the intersection safely.

In a possible design solution, the determining moving semantics of a target vehicle includes: determining the moving semantics based on a first angle and/or a first distance. The first angle is an included angle between a traveling direction corresponding to a first location and a first reference line, the first distance is a relative distance between the first location and the first reference line, the first reference line is perpendicular to a lane stop line of the entrance road, a direction of the first reference line is consistent with a traveling direction corresponding to the entrance road, and the first location is any location of the target vehicle in a historical traveling track.

In other words, semantic abstraction is performed on the behavior of the target vehicle, to obtain information about that the target vehicle is going to turn left, go straight, turn right, or turn around or is turning left, going straight, turning right, or turning around.

Optionally, the first angle may be determined based on the first distance.

In a possible design solution, the determining the moving semantics based on a first angle includes: if the first angle is greater than a first angle threshold and is less than or equal to a second angle threshold, determining that the moving semantics of the target vehicle is turning left; if an absolute value of the first angle is less than or equal to the first angle threshold, determining that the moving semantics of the target vehicle is going straight; if the first angle is less than a negative value of the first angle threshold, determining that the moving semantics of the target vehicle is turning right; and if the first angle is greater than the second angle threshold, determining that the moving semantics of the target vehicle is turning around. Both the first angle threshold and the second angle threshold are angles biased toward the left side of the first reference line.

Optionally, a direction coinciding with the first reference line is determined as 0 degrees, an angle biased toward the left side of the first reference line is determined as a positive angle, and an angle biased toward the right side of the first reference line is determined as a negative angle.

In a possible design solution, the determining road geometric semantics includes: determining the road geometric semantics based on the entrance road and an intersection topology structure. The road geometric semantics includes one or more of the following: A traveling rule of a road associated with the entrance road is turning left, a traveling rule of a road associated with the entrance road is turning right, a traveling rule of a road associated with the entrance road is going straight, and a traveling rule of a road associated with the entrance road is turning around. The road corresponding to turning left includes a left-turn exit lane and/or a virtual left-turn lane, the road corresponding to turning right includes a right-turn exit lane and/or a virtual right-turn lane, the road corresponding to going straight includes a straight exit lane and/or a virtual straight lane, and the road corresponding to turning around includes a turn-around exit lane and/or a virtual turn-around lane. The exit road includes at least one exit lane, and the at least one exit lane includes one or more of the left-turn exit lane, the right-turn exit lane, the straight exit lane, and the turn-around exit lane. The virtual lane includes one or more of the virtual left-turn lane, the virtual right-turn lane, the virtual straight lane, and the virtual turn-around lane.

In this way, the road geometric semantics of the intersection at which the target vehicle is currently located is determined, and a problem of a difference between structures of different intersections is considered. This lays a foundation for improving accuracy of determining the future traveling track of the vehicle passing through the intersection.

In a possible design solution, the determining the road geometric semantics based on the entrance road and the intersection topology structure includes: determining the road geometric semantics based on a second angle. The second angle is an angle between the exit lane or the virtual lane and the entrance road, and the second angle is determined based on the intersection topology structure. In other words, semantic abstraction is performed on a road or a lane at the intersection by using the entrance road of the target vehicle at the intersection as a reference.

In a possible design solution, the determining the road geometric semantics based on a second angle includes: if the second angle is greater than a third angle threshold and less than or equal to a fourth angle threshold, determining that the traveling rule of the exit lane or the virtual lane is turning left; if the absolute value of the second angle is less than or equal to the third angle threshold, determining that the traveling rule of the exit lane or the virtual lane is going straight; if the second angle is less than a negative value of the third angle threshold, determining that the traveling rule of the exit lane or the virtual lane is turning right; and if the second angle is greater than the fourth angle threshold, determining that the traveling rule of the exit lane or the virtual lane is turning around. Both the third angle threshold and the fourth angle threshold are angles biased toward the left side of the first reference line.

In a possible design solution, the obtaining a traveling track of the target vehicle in a first time period based on moving information of the target vehicle, the moving semantics, and the road geometric semantics includes: determining a target exit road based on the moving semantics and the intersection topology structure, determining a target virtual lane and a target exit lane based on the target exit road and the road geometric semantics, and obtaining the traveling track of the target vehicle in the first time period based on the moving information and the target exit lane of the target vehicle.

In this way, a hierarchical reasoning manner is used. A road matching the moving semantics is first obtained, and then a lane matching the moving semantics is obtained, to obtain a future traveling track. This can reduce operation complexity of a system, and improve working efficiency of the system.

In a possible design solution, the determining a target exit road based on the moving semantics and the intersection topology structure includes: determining at least one second candidate exit road from at least one first candidate exit road based on the historical traveling track, and determining a third candidate exit road from the at least one second candidate exit road based on the moving semantics. The at least one first candidate exit road is determined based on the intersection topology structure, and the third candidate exit road is the target exit road.

In this way, some possible exit roads are first selected from all the exit roads of the target vehicle at the intersection based on the historical traveling track, and finally, a most possible exit road, that is, the target exit road, is quickly and accurately determined from the possible exit roads based on the moving semantics of the target vehicle.

In a possible design solution, the determining a target virtual lane and a target exit lane based on the target exit road and the road geometric semantics includes: determining at least one first candidate virtual lane based on the target exit road and the intersection topology structure, determining a second candidate virtual lane from the at least one first candidate virtual lane based on a first parameter, and determining a first candidate exit lane based on the target virtual lane and the intersection topology structure.

The second candidate virtual lane is the target virtual lane, and the first candidate exit lane is the target exit lane. The first parameter includes a second distance, a third angle, and a semantic matching result. The second distance is a distance between the target vehicle and a second location, the third angle is an included angle between the traveling direction of the target vehicle and a traveling direction corresponding to the second location, the semantic matching result is a matching result between geometric semantics of the first candidate virtual lane and the moving semantics, and the second location is a location at which the target vehicle vertically intersects a reference line of the first candidate virtual lane.

In this way, the target virtual lane and the target exit lane at a lane layer are further determined from one or more lanes corresponding to the target exit road. To be specific, the target virtual lane is first determined from the one or more virtual lanes corresponding to the target exit road, and then the target exit lane is determined from the one or more exit lanes based on the target virtual lane.

In a possible design solution, the determining a second candidate virtual lane from the at least one first candidate virtual lane based on a first parameter includes: determining at least one first score of the first candidate virtual lane based on at least one first ranking order of the at least one first candidate virtual lane, performing weighted summation on the at least one first score to obtain a second score of the at least one first candidate virtual lane, and determining the second candidate virtual lane based on the second score of the at least one first candidate virtual lane. The first ranking order is a ranking of the first candidate virtual lane according to each parameter in the first parameter.

Optionally, a first candidate virtual lane with a highest second score may be selected as the second candidate virtual lane based on the second score of the at least one first candidate virtual lane.

In a possible design solution, the track prediction method according to the first aspect may further include: obtaining a result accumulation of the at least one first candidate exit road or the at least one first candidate virtual lane based on a first quantity of times and a first time deviation; and determining the target exit road, the target exit lane, or the target virtual lane based on the result accumulation of the at least one first candidate exit road or the at least one first candidate virtual lane.

The first quantity of times is a quantity of times that the first candidate exit road is determined as a third candidate exit road in M historical moments, and the first time deviation is a time deviation between a moment at which the first candidate exit road is determined as the third candidate exit road and a current moment, or the first quantity of times is a quantity of times that the first candidate virtual lane is determined as a second candidate virtual lane in M historical moments, and the first time deviation is a time deviation between a moment at which the first candidate virtual lane is determined as the second candidate virtual lane and a current moment.

In this way, the target virtual lane is accurately determined based on an evidence accumulation enhancement idea and determining results at a plurality of historical moments, and then the target exit lane is accurately determined based on the target virtual lane, to improve accuracy of track prediction.

In a possible design solution, the result accumulation meets the following relationship:

$$E_i = \sum_{t-M}^{t} W(t) * e_i,$$

where

E_i is a result accumulation of a first candidate exit road i or a first candidate virtual lane i, t is a current moment, M is a historical moment, $e_i$ indicates whether the first candidate exit road i or the first candidate virtual lane i exists in a single determining result, $e_i$ is 1 or 0, W(t) is a weight value of $e_i$, and W(t) meets the following relationship:

$$W(t) = \frac{1}{(t - t_i)^2},$$

where

$t_i$ indicates a historical moment at which the first candidate exit road i or the first candidate virtual lane i exists in the single determining result.

Optionally, W(t) may be a time-related factor. For the current moment t, a larger time deviation between a historical moment and the current moment indicates a smaller value of a determining result at the historical moment and a smaller corresponding weight value.

According to a second aspect, a track prediction apparatus is provided. The apparatus includes a determining unit and an obtaining unit.

The determining unit is configured to determine moving semantics of a target vehicle. The moving semantics indicates a behavior of the target vehicle, and the behavior of the target vehicle includes turning left, going straight, turning right, or turning around.

The determining unit is further configured to determine road geometric semantics. The road geometric semantics indicates a traveling rule that is of an exit road and/or a virtual lane included in an intersection at which the target vehicle is located and that is specified by using an entrance road as a reference, and the entrance road is an entrance of the intersection at which the target vehicle is located.

The obtaining unit is configured to obtain a traveling track of the target vehicle in a first time period based on moving information of the target vehicle, the moving semantics, and the road geometric semantics. The moving information includes a moving direction of the target vehicle and a current location of the target vehicle, and the first time period is a period of time starting from a next moment of a moment corresponding to the current location of the target vehicle.

In a possible design solution, the determining unit is further configured to determine the moving semantics based on a first angle and/or a first distance. The first angle is an included angle between a traveling direction corresponding to a first location and a first reference line, the first distance is a relative distance between the first location and the first reference line, the first reference line is perpendicular to a lane stop line of the entrance road, a direction of the first reference line is consistent with a traveling direction corresponding to the entrance road, and the first location is any location of the target vehicle in a historical traveling track.

Optionally, the first angle may be determined based on the first distance.

In a possible design solution, the determining unit is further configured to: if the first angle is greater than a first angle threshold and is less than or equal to a second angle threshold, determine that the moving semantics of the target vehicle is turning left; if an absolute value of the first angle is less than or equal to the first angle threshold, determine that the moving semantics of the target vehicle is going straight; if the first angle is less than a negative value of the first angle threshold, determine that the moving semantics of the target vehicle is turning right; and if the first angle is greater than the second angle threshold, determine that the moving semantics of the target vehicle is turning around. Both the first angle threshold and the second angle threshold are angles biased toward the left side of the first reference line.

In a possible design solution, the determining unit is further configured to determine the road geometric semantics based on the entrance road and an intersection topology structure. The road geometric semantics includes one or more of the following: A traveling rule of a road associated with the entrance road is turning left, a traveling rule of a road associated with the entrance road is turning right, a traveling rule of a road associated with the entrance road is going straight, and a traveling rule of a road associated with the entrance road is turning around. The road corresponding to turning left includes a left-turn exit lane and/or a virtual left-turn lane, the road corresponding to turning right includes a right-turn exit lane and/or a virtual right-turn lane, the road corresponding to going straight includes a straight exit lane and/or a virtual straight lane, and the road corresponding to turning around includes a turn-around exit lane and/or a virtual turn-around lane. The exit road includes at least one exit lane, and the at least one exit lane includes one or more of the left-turn exit lane, the right-turn exit lane, the straight exit lane, and the turn-around exit lane. The virtual lane includes one or more of the virtual left-turn lane, the virtual right-turn lane, the virtual straight lane, and the virtual turn-around lane.

In a possible design solution, the determining unit is further configured to determine the road geometric semantics based on a second angle. The second angle is an angle between the exit lane or the virtual lane and the entrance road, and the second angle is determined based on the intersection topology structure.

In a possible design solution, the determining unit is further configured to: if the second angle is greater than a third angle threshold and less than or equal to a fourth angle threshold, determine that a traveling rule of the exit lane or the virtual lane is turning left; if an absolute value of the second angle is less than or equal to the third angle threshold, determine that a traveling rule of the exit lane or the virtual lane is going straight; if the second angle is less than a negative value of the third angle threshold, determine that a traveling rule of the exit lane or the virtual lane is turning right; or if the second angle is greater than the fourth angle threshold, determine that a traveling rule of the exit lane or the virtual lane is turning around. Both the third angle threshold and the fourth angle threshold are angles biased toward the left side of the first reference line.

In a possible design solution, the obtaining unit is further configured to: determine a target exit road based on the moving semantics and the intersection topology structure, determine a target virtual lane and a target exit lane based on the target exit road and the road geometric semantics, and obtain the traveling track of the target vehicle in the first time period based on the moving information of the target vehicle and the target exit lane.

In a possible design solution, the obtaining unit is further configured to: determine at least one second candidate exit road from at least one first candidate exit road based on the historical traveling track, and determine a third candidate exit road from the at least one second candidate exit road based on the moving semantics. The at least one first candidate exit road is determined based on the intersection topology structure, and the third candidate exit road is the target exit road.

In a possible design solution, the obtaining unit is further configured to: determine at least one first candidate virtual lane based on the target exit road and the intersection topology structure, determine a second candidate virtual lane from the at least one first candidate virtual lane based on a first parameter, and determine a first candidate exit lane based on the target virtual lane and the intersection topology structure. The second candidate virtual lane is the target virtual lane, and the first candidate exit lane is the target exit lane. The first parameter includes a second distance, a third angle, and a semantic matching result. The second distance is a distance between the target vehicle and a second location, the third angle is an included angle between the traveling direction of the target vehicle and a traveling direction corresponding to the second location, the semantic matching result is a matching result between geometric semantics of the first candidate virtual lane and the moving semantics, and the second location is a location at which the target vehicle vertically intersects a reference line of the first candidate virtual lane.

In a possible design solution, the obtaining unit is further configured to: determine at least one first score of the first candidate virtual lane based on at least one first ranking order of the at least one first candidate virtual lane, perform weighted summation on the at least one first score to obtain a second score of the at least one first candidate virtual lane, and determine the second candidate virtual lane based on the second score of the at least one first candidate virtual lane. The first ranking order is a ranking of the first candidate virtual lane according to each parameter in the first parameter.

In a possible design solution, the obtaining unit is further configured to obtain a result accumulation of the at least one first candidate exit road or the at least one first candidate virtual lane based on a first quantity of times and a first time deviation.

The first quantity of times is a quantity of times that the first candidate exit road is determined as a third candidate exit road in M historical moments, and the first time deviation is a time deviation between a moment at which the first candidate exit road is determined as the third candidate exit road and a current moment, or the first quantity of times is a quantity of times that the first candidate virtual lane is determined as a second candidate virtual lane in M historical moments, and the first time deviation is a time deviation between a moment at which the first candidate virtual lane is determined as the second candidate virtual lane and a current moment.

The determining unit is further configured to determine the target exit road, the target exit lane, or the target virtual lane based on the result accumulation of the at least one first candidate exit road or the at least one first candidate virtual lane.

In a possible design solution, the result accumulation meets the following relationship:

$$E_i = \sum_{t-M}^{t} W(t) * e_i ,$$

where

$E_i$ is a result accumulation of a first candidate exit road i or a first candidate virtual lane i, t is a current moment, M is a historical moment, $e_i$ indicates whether the first candidate exit road i or the first candidate virtual lane i exists in a single determining result, $e_i$ is 1 or 0, W(t) is a weight value of $e_i$, and W(t) meets the following relationship:

$$W(t) = \frac{1}{(t-t_i)^2} ,$$

where

$t_i$ indicates a historical moment at which the first candidate exit road i or the first candidate virtual lane i exists in the single determining result.

Optionally, the track prediction apparatus according to the second aspect may further include a storage unit, and the storage unit stores a program or instructions. When the determining unit or the obtaining unit executes the program or the instructions, the track prediction apparatus according to the second aspect can perform the method according to the first aspect.

In addition, for a technical effect of the track prediction apparatus according to the second aspect, refer to a technical effect of the track prediction method according to any possible implementation of the first aspect. Details are not described herein again.

According to a third aspect, this application provides a track prediction apparatus. The apparatus includes a processor and a memory. The memory is configured to store computer program instructions, and the processor runs the computer program instructions, so that the track prediction apparatus performs the track prediction method according to the first aspect.

According to a fourth aspect, this application provides a computer-readable storage medium, including computer instructions. When the computer instructions are run by a processor, a track prediction apparatus is enabled to perform the track prediction method according to the first aspect.

According to a fifth aspect, this application provides a computer program product. When the computer program product runs on a processor, a track prediction apparatus is enabled to perform the track prediction method according to the first aspect.

## BRIEF DESCRIPTION OF DRAWINGS

FIG. 1 is a schematic diagram 1 of a structure of an autonomous driving vehicle according to an embodiment of this application;
FIG. 2 is a schematic diagram 2 of a structure of an autonomous driving vehicle according to an embodiment of this application;
FIG. 3 is a schematic diagram of a structure of a computer system according to an embodiment of this application;
FIG. 4 is a schematic diagram of a structure of a chip system according to an embodiment of this application;
FIG. 5 is a schematic diagram 1 of application of a cloud-side instruction autonomous driving vehicle according to an embodiment of this application;
FIG. 6 is a schematic diagram 2 of application of a cloud-side instruction autonomous driving vehicle according to an embodiment of this application;
FIG. 7 is a schematic diagram of a structure of a computer program product according to an embodiment of this application;
FIG. 8 is a schematic flowchart 1 of a track prediction method according to an embodiment of this application;
FIG. 9 is a schematic diagram 1 of a structure of an intersection according to an embodiment of this application;
FIG. 10 is a schematic diagram of a first angle and a first distance according to an embodiment of this application;
FIG. 11 is a schematic diagram of a second angle according to an embodiment of this application;
FIG. 12 is a schematic flowchart 2 of a track prediction method according to an embodiment of this application;
FIG. 13 is a schematic diagram 2 of a structure of an intersection according to an embodiment of this application;

FIG. 14 is a schematic diagram 1 of a structure of a track prediction apparatus according to an embodiment of this application; and

FIG. 15 is a schematic diagram 2 of a structure of a track prediction apparatus according to an embodiment of this application.

## DESCRIPTION OF EMBODIMENTS

The following describes the technical solutions in this application with reference to the accompanying drawings.

Embodiments of this application provide a track prediction method. The method is applied to a vehicle, or applied to another device (for example, a cloud server) having a vehicle control function. The vehicle may be an autonomous driving vehicle, and the autonomous driving vehicle may be a vehicle that has a partially autonomous driving function, or may be a vehicle that has a fully autonomous driving function. That is, an autonomous driving level of the vehicle may be classified into no automation (L0), driver assistance (L1), partial automation (L2), conditional automation (L3), high automation (L4), or full automation (L5) based on a classification standard of the Society of Automotive Engineers (Society of Automotive Engineers, SAE). The vehicle or another device may implement, by using a component (including hardware and/or software) included in the vehicle or the another device, the track prediction method provided in embodiments of this application.

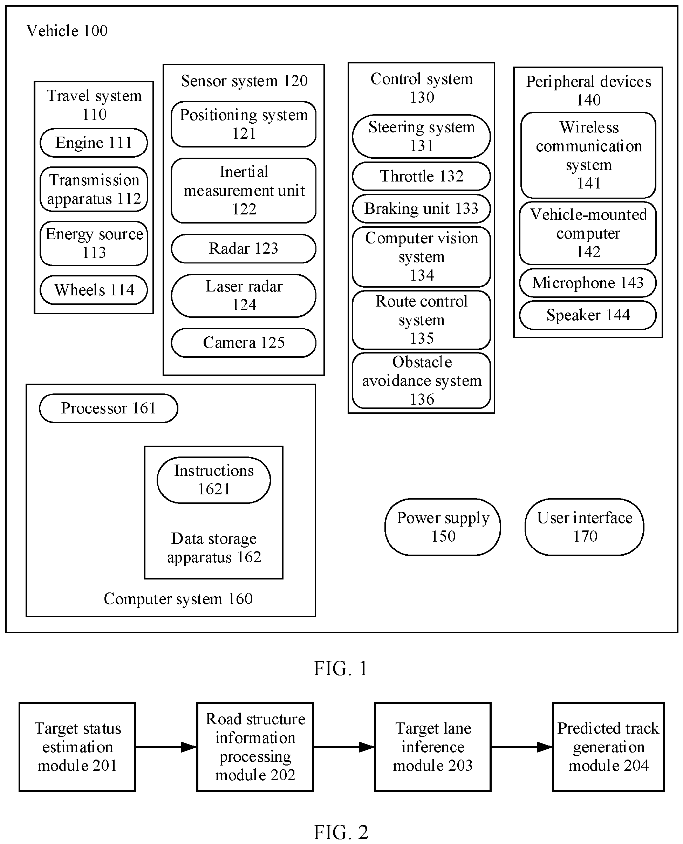

FIG. 1 is a schematic diagram of a structure of an autonomous driving vehicle according to an embodiment of this application. In an embodiment, a vehicle 100 is configured to be in a fully autonomous driving mode or a partially autonomous driving mode. For example, when the vehicle 100 is in the partially autonomous driving mode (that is, L2) or L3, L4, and L5, the vehicle 100 may determine moving semantics of a target vehicle, determine road geometric semantics, and then obtain a traveling track of the target vehicle in a first time period based on moving information of the target vehicle, the moving semantics, and the road geometric semantics. The moving semantics indicates a behavior of the target vehicle, and the behavior of the target vehicle includes turning left, going straight, turning right, or turning around. The road geometric semantics indicates a traveling rule that is of an exit road and/or a virtual lane included in an intersection at which the target vehicle is located and that is specified by using an entrance road as a reference, and the entrance road is an entrance of the intersection at which the target vehicle is located. The moving information includes a moving direction of the target vehicle and a current location of the target vehicle, and the first time period is a period of time starting from a next moment of a moment corresponding to the current location of the target vehicle.

The vehicle 100 may include various subsystems, such as a travel system 110, a sensor system 120, a control system 130, one or more peripheral devices 140, a power supply 150, a computer system 160, and a user interface 170. Optionally, the vehicle 100 may include more or fewer subsystems, and each subsystem may include a plurality of elements. In addition, all the subsystems and elements of the vehicle 100 may be interconnected in a wired or wireless manner.

The travel system 110 may include a component that powers the vehicle 100 for movement. In an embodiment, the travel system 110 may include an engine 111, a transmission apparatus 112, an energy source 113, and wheels 114. The engine 111 may be an internal combustion engine, an electric motor, an air compression engine, or a combination of other types of engines, for example, a hybrid engine formed by a gasoline engine and an electric motor, or a hybrid engine formed by an internal combustion engine and an air compression engine. The engine 111 converts the energy source 113 into mechanical energy.

Examples of the energy source 113 include gasoline, diesel, another oil-based fuel, propane, another compressed gas-based fuel, ethanol, a solar panel, a battery, and another power source. The energy source 113 may also provide energy to another system of the vehicle 100.

The transmission apparatus 112 may transmit mechanical power from the engine 111 to the wheels 114. The transmission apparatus 112 may include a gearbox, a differential, and a drive shaft. In an embodiment, the transmission apparatus 112 may further include another device, for example, a clutch. The drive shaft may include one or more shafts that may be coupled to one or more wheels 114.

The sensor system 120 may include several sensors that sense information about an ambient environment of the vehicle 100. For example, the sensor system 120 may include a positioning system 121 (the positioning system may be a global positioning system (global positioning system, GPS), a BeiDou system, or another positioning system), an inertial measurement unit (inertial measurement unit, IMU) 122, a radar 123, a laser radar 124, and a camera 125. The sensor system 120 may further include sensors (for example, an in-vehicle air quality monitor, a fuel gauge, and an oil temperature gauge) of an internal system of the monitored vehicle 100. One or more pieces of sensor data collected by these sensors may be used to detect an object and a corresponding feature (a location, a shape, a direction, a speed, or the like) of the object. Such detection and recognition are keys for implementing a secure operation of autonomous driving by the vehicle 100.

The positioning system 121 may be configured to estimate a geographical location of the vehicle 100. The IMU 122 is configured to sense, based on an inertial acceleration, a location of the vehicle 100 and a change of a direction that the vehicle 100 faces. In an embodiment, the IMU 122 may be a combination of an accelerometer and a gyroscope.

The radar 123 may sense an object in the ambient environment of the vehicle 100 by using a radio signal. In some embodiments, in addition to sensing the object, the radar 123 can be further configured to sense a speed and/or an advancing direction of the object.

The laser radar 124 may use a laser to sense an object in an environment in which the vehicle 100 is located. In some embodiments, the laser radar 124 may include one or more laser sources, laser scanners, one or more detectors, and another system component.

The camera 125 may be configured to capture a plurality of images of the ambient environment of the vehicle 100 and a plurality of images in a vehicle driving cabin. The camera 125 may be a static camera or a video camera.

The control system 130 may control operations of the vehicle 100 and its components. The control system 130 may include various components, including a steering system 131, a throttle 132, a braking unit 133, a computer vision system 134, a route control system 135, and an obstacle avoidance system 136.

The steering system 131 is operable to adjust an advancing direction of the vehicle 100. For example, in an embodiment, the steering system 131 may be a steering wheel system.

The throttle 132 is configured to control an operating speed of the engine 111, to further control a speed of the vehicle 100.

The braking unit 133 is configured to control the vehicle 100 to decelerate. The braking unit 133 may use friction to reduce a rotational speed of the wheel 114. In another embodiment, the braking unit 133 may alternatively convert kinetic energy of the wheel 114 into a current. The braking unit 133 may alternatively use another form to reduce the rotational speed of the wheel 114, to control the speed of the vehicle 100.

The computer vision system 134 may process and analyze an image captured by the camera 125, to recognize an object and/or a feature in the ambient environment of the vehicle 100 and a body feature and a facial feature of a driver in the vehicle driving cabin. The object and/or the feature may include a traffic signal, a road condition, and an obstacle, and the body feature and the facial feature of the driver include a behavior, a line of sight, an expression, and the like of the driver. The computer vision system 134 may use an object recognition algorithm, a structure from motion (structure from motion, SFM) algorithm, video tracking, and another computer vision technology. In some embodiments, the computer vision system 134 may be further configured to draw a map for an environment, track an object, estimate a speed of the object, determine a driver behavior, perform facial recognition, and the like.

The route control system 135 is configured to determine a traveling route of the vehicle 100. In some embodiments, the route control system 135 may determine the traveling route of the vehicle 100 with reference to data from the sensor, the positioning system 121, and one or more predetermined maps.

The obstacle avoidance system 136 is configured to identify, evaluate, and avoid or otherwise bypass a potential obstacle in an environment of the vehicle 100.

Certainly, in an example, the control system 130 may add or alternatively include components other than the components shown and described. Alternatively, the control system 130 may delete some of the foregoing components.

The vehicle 100 interacts with an external sensor, another vehicle, another computer system, or a user by using the peripheral device 140. The peripheral device 140 may include a wireless communication system 141, a vehicle-mounted computer 142, a microphone 143, and/or a speaker 144.

In some embodiments, the peripheral device 140 provides a means for a user of the vehicle 100 to interact with the user interface 170. For example, the vehicle-mounted computer 142 may provide information for the user of the vehicle 100. The user interface 170 may further operate the vehicle-mounted computer 142 to receive input from the user. The vehicle-mounted computer 142 may perform operations through a touchscreen. In another case, the peripheral device 140 may provide a means for the vehicle 100 to communicate with another device located in the vehicle. For example, the microphone 143 may receive audio (for example, a voice command or other audio input) from the user of the vehicle 100. Likewise, the speaker 144 may output audio to the user of the vehicle 100.

The wireless communication system 141 may wirelessly communicate with one or more devices directly or through a communication network. For example, the wireless communication system 141 may perform communication through a 3G cellular network such as CDMA, EVD0, or GSM/GPRS, perform communication through a 4G cellular network such as LTE, or perform communication through a 5G cellular network. The wireless communication system 141 may communicate with a wireless local area network (wireless local area network, WLAN) by using Wi-Fi. In some embodiments, the wireless communication system 141 may directly communicate with a device by using an infrared link or Bluetooth. Other wireless protocols, for example, various vehicle communication systems, such as the wireless communication system 141, may include one or more dedicated short-range communications (dedicated short-range communications, DSRC) devices.

The power supply 150 may provide power to various components of the vehicle 100. In an embodiment, the power supply 150 may be a rechargeable lithium-ion or lead-acid battery. One or more battery packs of such batteries may be configured as the power supply to supply power to the components of the vehicle 100. In some embodiments, the power supply 150 and the energy source 113 may be implemented together, as in some battery electric vehicles.

Some or all of functions of the vehicle 100 are controlled by the computer system 160. The computer system 160 may include at least one processor 161. The processor 161 executes instructions 1621 stored in a non-transitory computer-readable medium such as a data storage apparatus 162. The computer system 160 may be a plurality of computing devices that control an individual component or a subsystem of the vehicle 100 in a distributed manner.

The processor 161 may be any conventional processor, such as a commercially available central processing unit (central processing unit, CPU). Alternatively, the processor may be a dedicated device such as an application-specific integrated circuit (application-specific integrated circuit, ASIC) or another hardware-based processor. Although FIG. 1 functionally shows a processor, a memory, and other elements in a same physical housing, a person of ordinary skill in the art should understand that the processor, the computer system, or the memory may actually include a plurality of processors, computer systems, or memories that may be stored in the same physical housing, or may include a plurality of processors, computer systems, or memories that may not be stored in the same physical housing. For example, the memory may be a hard disk drive or another storage medium located in a different physical housing. Therefore, references to the processor or the computer system will be understood as including references to a set of processors or computer systems or memories that can be operated in parallel, or references to a set of processors or computer systems or memories that may not be operated in parallel. Different from using a single processor to perform the steps described herein, some components, such as a steering component and a deceleration component, each may include a respective processor that performs only computation related to a component-specific function.

In various aspects described herein, the processor may be located far away from the vehicle and wirelessly communicate with the vehicle. In other aspects, some of the processes described herein are performed on a processor disposed in the vehicle, while others are performed by a remote processor.

In some embodiments, the data storage apparatus 162 may include the instructions 1621 (for example, program logic), and the instructions 1621 may be executed by the processor 161 to perform various functions of the vehicle 100, including the functions described above. The data storage apparatus 162 may also include additional instructions, including instructions to send data to, receive data from, interact with, and/or control one or more of the travel system 110, the sensor system 120, the control system 130, and the peripheral device 140.

In addition to the instructions 1621, the data storage apparatus 162 may further store data, such as a road map, route information, a location, a direction, a speed, and other vehicle data of the vehicle, and other information. Such information may be used by the vehicle 100 and the computer system 160 when the vehicle 100 operates in an autonomous mode, a semi-autonomous mode, and/or a manual mode.

For example, the data storage apparatus 162 may obtain driver information and ambient environment information from the sensor system 120 or another component of the vehicle 100. For example, the environment information may be a road type, current weather, current time, or the like of a road on which the vehicle is currently located, and the driver information may be an identity of a driver, driving experience of the driver, a current physical condition of the driver, or the like. The data storage apparatus 162 may further store status information of the vehicle and status information of another vehicle or device near the vehicle. The status information includes but is not limited to a speed, an acceleration, a course angle, a location, a moving track, and the like of the vehicle. For example, the vehicle obtains a speed of the vehicle, a speed of another vehicle, and the like based on a speed measurement function and a distance measurement function of the radar 123 and the laser radar 124. In this way, the processor 161 may process information obtained by the processor 161 from the data storage apparatus 162, to determine a future traveling track of another vehicle, to ensure security of route planning of the vehicle, so as to safely pass through an intersection.

The user interface 170 is configured to provide information to or receive information from the user of the vehicle 100. Optionally, the user interface 170 may include an interface for interaction and information exchange between one or more input/output devices in the set of peripheral devices 140 and the user. The one or more input/output devices in the set of peripheral devices 140 may be one or more of the wireless communication system 141, the vehicle-mounted computer 142, the microphone 143, and the speaker 144.

The computer system 160 may control the functions of the vehicle 100 based on input received from various subsystems (for example, the travel system 110, the sensor system 120, and the control system 130) and from the user interface 170. For example, the computer system 160 may utilize input from the control system 130 to control the steering system 131, to avoid obstacles detected by the sensor system 120 and the obstacle avoidance system 136. In some embodiments, the computer system 160 may operate to provide control over many aspects of the vehicle 100 and the subsystems of the vehicle 100.

Optionally, one or more of the foregoing components may be installed separately from or associated with the vehicle 100. For example, the data storage apparatus 162 may partially or completely exist separately from the vehicle 100. The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on this embodiment of this application.

The vehicle 100 may be a car, a truck, a motorcycle, a bus, an entertainment vehicle, an amusement park vehicle, or the like. This is not particularly limited in this embodiment of this application.

In some other embodiments of this application, the autonomous driving vehicle may further include a hardware structure and/or a software module, and implement the functions in a form of the hardware structure, the software module, or both the hardware structure and the software module. Whether one of the foregoing functions is performed by using a hardware structure, a software module, or a combination of a hardware structure and a software module depends on particular applications and design constraint conditions of the technical solutions. This is not specifically limited in this embodiment of this application.

Refer to FIG. 2. For example, a vehicle may include the following modules: a target status estimation module 201, a road structure information processing module 202, a target lane inference module 203, and a predicted track generation module 204.

The target status estimation module 201 uses a location and a moving speed of a target vehicle that are output after sensing and fusion by a vehicle-mounted sensor as input of the module, performs polynomial curve fitting on historical moving data of the target vehicle to obtain a historical moving track curve, performs moving semantic abstraction based on the historical moving track curve to obtain moving semantics (for example, turning left, going straight, turning right, or turning around) of the target vehicle, and sends the information to the road structure information processing module 202. The vehicle-mounted sensor may be a laser radar, an optical camera, a millimeter-wave radar, a vision sensor, or the like.

The road structure information processing module 202 is configured to: obtain, from a high-precision map (not shown in FIG. 2), road structure information (for example, an entrance road, an exit road, an exit lane, or a virtual lane) included in an intersection at which the target vehicle is currently located, obtain, based on the road structure information by using the entrance road as a reference, information such as geometric semantics of roads or lanes included in the intersection at which the target vehicle is located, and send the information to the target lane inference module 203. The road structure information processing module 202 is further configured to: obtain the roads or the lanes included in the intersection from a map interface based on the road structure information of the intersection at which the target vehicle is currently located, divide the roads into an entrance road and an exit road, divide the lanes into an actual lane and a virtual lane, and construct, based on a connection relationship between the roads, the lanes, and the virtual lane, an intersection topology structure including these elements. The road structure information processing module 202 is further configured to send the obtained intersection topology structure, the obtained geometric semantics of the roads or the lanes, and the information received from the target status estimation module 201 to the target lane inference module 203.

The target lane inference module 203 is configured to match all related roads at the intersection with each other based on the obtained historical moving track curve and the moving semantics of the target vehicle, to obtain a target exit road. The target lane inference module 203 is further configured to determine a target virtual lane and a target exit lane based on the obtained target exit road and the obtained road geometric semantics. The target lane inference module 203 is further configured to accurately determine the target exit lane based on an evidence accumulation enhancement idea and determining results at a plurality of historical moments, and send information about the determined target exit lane to the predicted track generation module 204.

The predicted track generation module 204 is configured to generate, in a fitting manner, a smooth curve as a future traveling track of the target vehicle based on the obtained target exit lane corresponding to the target vehicle at the intersection, a current location of the target vehicle, and a moving direction of the target vehicle.

Optionally, the vehicle may further include a high-precision map (not shown in FIG. 2), used to obtain related information of the intersection, for example, a road, a lane, and a lane line associated with the intersection, and further used to determine a location of the vehicle, and the like. A vehicle-mounted communication module (not shown in FIG. 2) is configured to exchange information between the vehicle and another vehicle. A storage component (not shown in FIG. 2) is configured to store executable code of the foregoing modules, and some or all of the method procedures in embodiments of this application can be implemented by running the executable code.

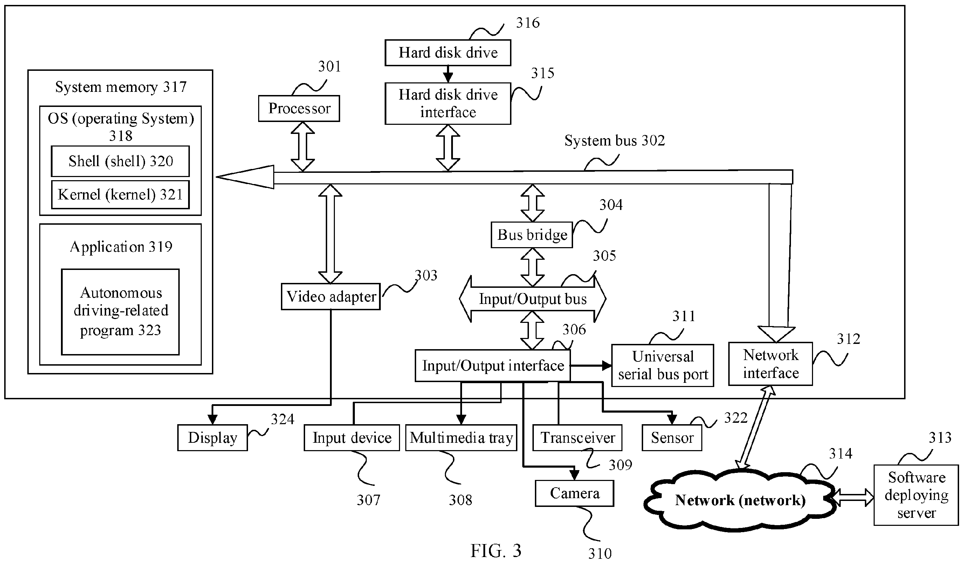

In a possible implementation of this embodiment of this application, as shown in FIG. 3, the computer system 160 shown in FIG. 1 includes a processor 301. The processor 301 is coupled to a system bus 302. The processor 301 may be one or more processors, and each processor may include one or more processor cores. A video adapter (video adapter) 303 may drive a display 324, and the display 324 is coupled to the system bus 302. The system bus 302 is coupled to an input/output (I/O) bus (BUS) 305 by using a bus bridge 304, an I/O interface 306 is coupled to the I/O bus 305, and the I/O interface 306 communicates with a plurality of I/O devices, such as an input device 307 (for example, a keyboard, a mouse, and a touchscreen) and a media tray (media tray) 308 (for example, a CD-ROM and a multimedia interface). A transceiver 309 (which may send and/or receive a radio communication signal), a camera 310 (which may capture static and dynamic digital video images), and an external universal serial bus (universal serial bus, USB) port 311 are further included. Optionally, an interface connected to the I/O interface 306 may be a USB interface.

The processor 301 may be any conventional processor, including a reduced instruction set computer (reduced instruction set computer, RISC) processor, a complex instruction set computer (complex instruction set computer, CISC) processor, or a combination thereof. Optionally, the processor 301 may alternatively be a dedicated apparatus such as an application-specific integrated circuit (ASIC). Optionally, the processor 301 may alternatively be a neural network processor or a combination of a neural network processor and the foregoing conventional processor.

Optionally, in various embodiments of this application, the computer system 160 may be located away from the autonomous driving vehicle, and may wirelessly communicate with the autonomous driving vehicle 100. In other aspects, some processes described in this application may be performed by a processor in the autonomous driving vehicle, and other processes are performed by a remote processor.

The computer system 160 may communicate with a software deploying server (deploying server) 313 through a network interface 312. Optionally, the network interface 312 may be a hardware network interface, for example, a network adapter. A network (network) 314 may be an external network, for example, the Internet, or may be an internal network, for example, an Ethernet or a virtual private network (VPN). Optionally, the network 314 may be a wireless network, for example, a Wi-Fi network or a cellular network.

A hard disk drive interface 315 is coupled to the system bus 302. The hard disk drive interface 315 is connected to a hard disk drive 316. A system memory 317 is coupled to the system bus 302. Data running in the system memory 317 may include an operating system (OS) 318 and an application 319 of the computer system 160.

The operating system (OS) 318 includes but is not limited to a shell (shell) 320 and a kernel (kernel) 321. The shell 320 is an interface between a user and the kernel 321 of the operating system 318. The shell 320 is an outermost layer of the operating system 318. The shell 320 manages interaction between the user and the operating system 318: waiting for input of the user, explaining the input of the user to the operating system 318, and processing output results of various operating systems 318. The shell 320 may also be referred to as a computer shell 320.

The kernel 321 is formed by a part that is in the operating system 318 and that is configured to manage a memory, a file, a peripheral, and a system resource, and directly interacts with hardware. The kernel 321 of the operating system 318 usually runs a process, provides communication between processes, and provides functions such as CPU time slice management, interruption, memory management, and I/O management.

The application 319 includes an autonomous driving-related program 323, for example, a program for managing interaction between an autonomous driving car and an obstacle on a road, a program for controlling a traveling route or speed of the autonomous driving car, and a program for controlling interaction between the autonomous driving car and another car/autonomous driving car on the road. The application 319 also exists in a system of the deploying server 313. In an embodiment, the computer system 160 may download the application 319 from the deploying server 313 when the application 319 needs to be executed.

For another example, the application 319 may be an application for determining a driving policy. The processor 301 of the computer system 160 invokes the application 319 to obtain the driving policy.

A sensor 322 is associated with the computer system 160. The sensor 322 is configured to detect an ambient environment of the computer system 160. For example, the sensor 322 may detect an animal, a car, an obstacle, and/or a sidewalk. Further, the sensor 322 may further detect an ambient environment of the foregoing object such as an animal, a car, an obstacle, and/or a sidewalk. For example, an ambient environment of an animal includes, for example, another animal that appears near the animal, a weather condition, and brightness of the ambient environment of the animal. Optionally, if the computer system 160 is located on an autonomous driving car, the sensor 322 may be at least one of components such as a camera, an infrared sensor, a chemical detector, and a microphone.

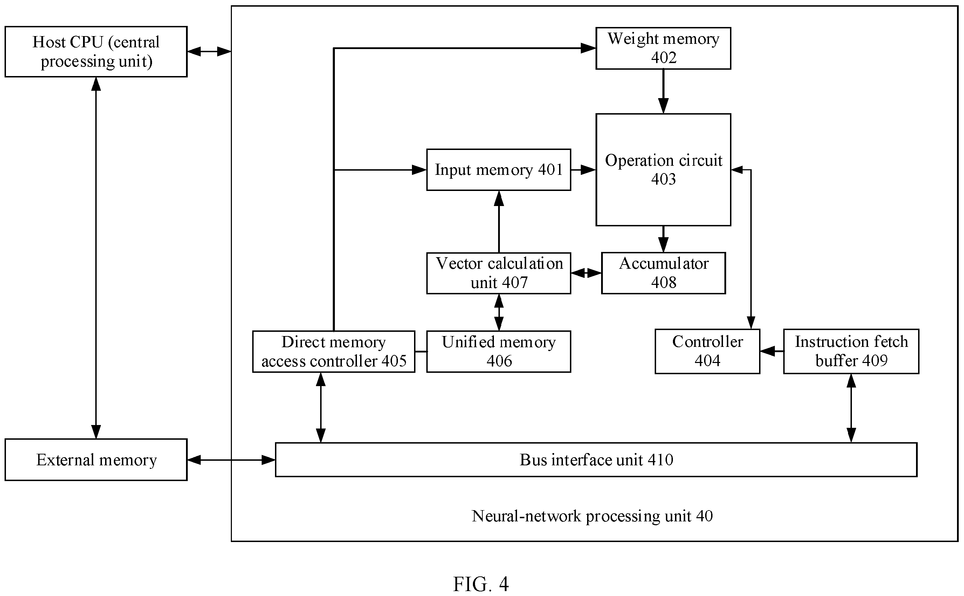

In some other embodiments of this application, the track prediction method in embodiments of this application may further be executed by a chip system. FIG. 4 is a diagram of a structure of a chip system according to an embodiment of this application.

A neural-network processing unit (neural-network processing unit, NPU) 40 is mounted on a host CPU (host CPU) as a coprocessor, and the host CPU allocates a task to the NPU 40. A core part of the NPU 40 is an operation circuit 403. For example, a controller 404 controls the operation circuit 403, so that the operation circuit 403 performs a multiplication operation by using matrix data extracted from a memory.

In some implementations, the operation circuit 403 internally includes a plurality of processing engines (processing engines, PEs). In some implementations, the operation circuit 403 is a two-dimensional systolic array. Optionally, the operation circuit 403 may alternatively be a one-dimensional systolic array or another electronic circuit that can perform mathematical operations such as multiplication and addition. In some implementations, the operation circuit 403 is a general-purpose matrix processor.

For example, it is assumed that there is an input matrix A, a weight matrix B, and an output matrix C. The operation circuit 403 obtains data corresponding to the weight matrix B from a weight memory 402, and buffers the data on each PE in the operation circuit 403. The operation circuit 403 further obtains data corresponding to the input matrix A from the input memory 401, further performs a matrix operation based on the input matrix A and the weight matrix B, and stores a partial result or a final result of the matrix operation in an accumulator (accumulator) 408.

For another example, the operation circuit 403 may be configured to: implement a feature extraction model (for example, a convolutional neural network model), input image data into the convolutional neural network model, and obtain an image feature by performing an operation using the model. Further, the image feature is output to a classifier, and the classifier outputs a classification probability of an object in an image.

A unified memory 406 is configured to store input data and output data. Weight data in an external memory is directly sent to the weight memory 402 by using a direct memory access controller (direct memory access controller, DMAC) 405. Input data in the external memory may be moved to the unified memory 406 or to the input memory 401 by using the DMAC.

A bus interface unit (bus interface unit, BIU) 410 is configured for interaction between an advanced extensible interface (advanced extensible interface, AXI) bus, the DMAC, and an instruction fetch buffer (instruction fetch buffer) 409. The bus interface unit 410 is further used by the instruction fetch buffer 409 to obtain instructions from the external memory, and is further used by the direct memory access controller 405 to obtain original data of the input matrix A or the weight matrix B from the external memory.

The DMAC is mainly configured to move the input data in the external memory (DDR) to the unified memory 406, or move the weight data to the weight memory 402, or move the input data to the input memory 401.

A vector calculation unit 407 may include a plurality of operation processing units. The vector calculation unit 407 may be configured to further process an output of the operation circuit 403, such as vector multiplication, vector addition, exponential operation, logarithm operation, and size comparison, if required. The vector calculation unit 407 is mainly used for calculation at a non-convolutionalIFC layer network in a neural network, such as pooling (pooling), batch normalization (batch normalization), and local response normalization (local response normalization).

In some implementations, the vector calculation unit 407 stores a processed output vector into the unified memory 406. For example, the vector calculation unit 407 may apply a non-linear function to the output of the operation circuit 403, for example, a vector of an accumulated value, to generate an activation value. In some implementations, the vector calculation unit 407 generates a normalized value, a combined value, or both. In some implementations, the processed output vector can also be used as an activation input to the operation circuit 403, for example, for use at a subsequent layer in the neural network.

The controller 404 is connected to the instruction fetch buffer (instruction fetch buffer) 409, and instructions used by the controller 404 may be stored in the instruction fetch buffer 409.

In a possible implementation, the unified memory 406, the input memory 401, the weight memory 402, and the instruction fetch buffer 409 are all on-chip memories. The external memory is private for the NPU 40 hardware architecture.

With reference to FIG. 1 to FIG. 3, the host CPU and the NPU 40 may cooperate to implement a corresponding algorithm of a function required by the vehicle 100 in FIG. 1, or may implement a corresponding algorithm of a function required by the vehicle shown in FIG. 2, or may implement a corresponding algorithm of a function required by the computer system 160 shown in FIG. 3.

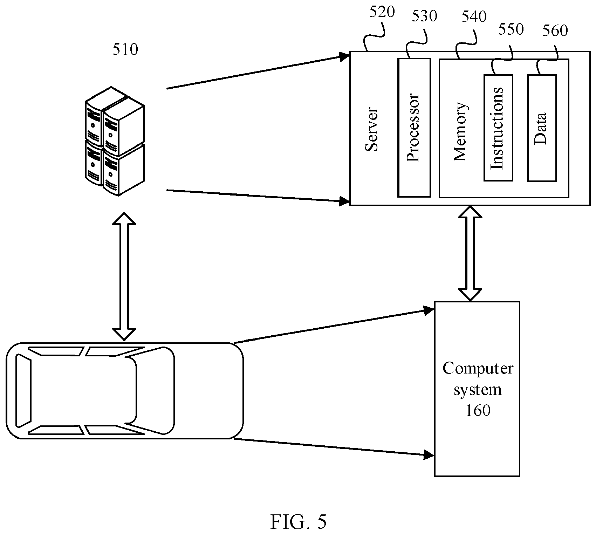

In some other embodiments of this application, the computer system 160 may further receive information from or transfer information to another computer system. Alternatively, sensor data collected from the sensor system 120 of the vehicle 100 may be transferred to another computer, and the another computer processes the data. As shown in FIG. 5, data from the computer system 160 may be transmitted through a network to a cloud-side computer system 510 for further processing. The network and an intermediate node may include various configurations and protocols, including Internet, World Wide Web, an intranet, a virtual private network, a wide area network, a local area network, a dedicated network using a proprietary communication protocol of one or more companies, Ethernet, Wi-Fi, HTTP, and various combinations thereof. Such communication may be performed by any device capable of transmitting data to and from another computer, such as a modem and a wireless interface.

In one example, the computer system 510 may include a server having a plurality of computers, such as a load balancing server group. In order to receive, process, and transfer data from the computer system 160, a server 520 exchanges information with different nodes of the network. The computer system 510 may have a configuration similar to that of the computer system 160, and has a processor 530, a memory 540, instructions 550, and data 560.

In one example, the data 560 of the server 520 may include providing weather-related information. For example, the server 520 may receive, monitor, store, update, and transmit various information related to a target object in an ambient environment. The information may include, for example, a target category, target shape information, and target tracking information in a report form, a radar information form, a prediction form, or the like.

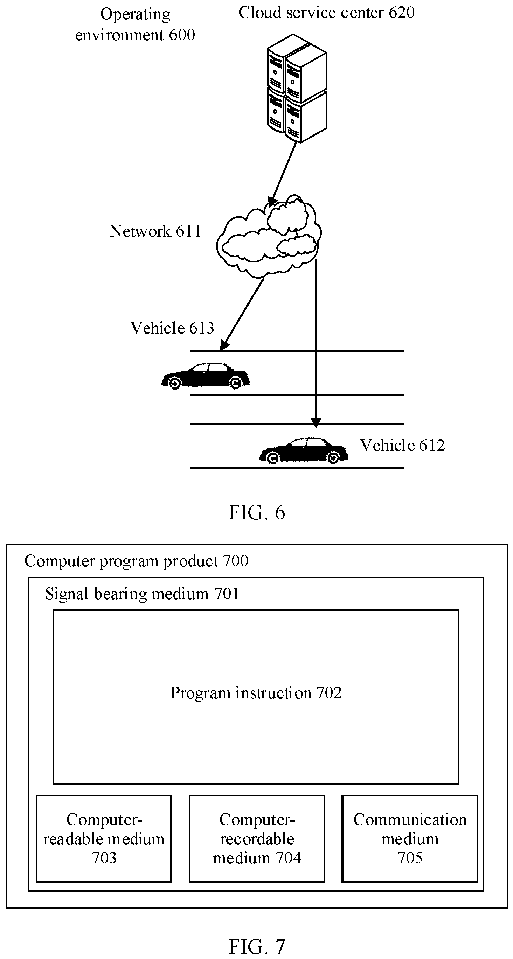

FIG. 6 is an example of interaction between an autonomous driving vehicle and a cloud service center (cloud server). The cloud service center may receive information (such as data collected by a vehicle sensor or other information) from autonomous driving vehicles 613 and 612 in an environment 600 of the cloud service center through a network 611 such as a wireless communication network.

The cloud service center 620 runs, based on received data, a program that is stored in the cloud service center and that is related to controlling autonomous driving of an automobile, to control the autonomous driving vehicles 613 and 612. The related program controlling autonomous driving of an automobile may be a program managing interaction between an autonomous driving automobile and an obstacle on a road, or a program controlling a route or a speed of the autonomous driving automobile, or a program controlling interaction between the autonomous driving automobile and another autonomous driving automobile on the road.

For example, the cloud service center 620 may provide a part of a map to the vehicles 613 and 612 by using the network 611. In another example, operations may be divided between different locations. For example, a plurality of cloud service centers may receive, acknowledge, combine, and/or send information reports. In some examples, information reports and/or sensor data may also be sent between vehicles. Another configuration is also possible.

In some examples, the cloud service center 620 sends, to the autonomous driving vehicle, a recommended solution (for example, informing a front obstacle and how to bypass it) about a possible driving situation in an environment. For example, the cloud service center 620 may assist the vehicle in determining how to travel when there is a specific obstacle ahead in the environment. The cloud service center 620 sends, to the autonomous driving vehicle, a response indicating how the vehicle should travel in a given scenario. For example, the cloud service center 620 may determine, based on collected sensor data, that there is a temporary stop sign in the road ahead, and for another example, determine, based on a "lane closed" sign and sensor data from a construction vehicle, that the lane is closed due to construction. Correspondingly, the cloud service center 620 sends a suggested operation mode for the vehicle to pass through the obstacle (for example, indicating the vehicle to change to a lane on another road). When the cloud server center 620 observes a video stream in the operating environment 600 of the cloud server center 620 and determines that the autonomous driving vehicle can safely and successfully go around the obstacle, operation steps used for the autonomous driving vehicle may be added to a driving information map. Correspondingly, the information may be sent to another vehicle that may encounter a same obstacle in the region, to assist the another vehicle not only in recognizing the closed lane but also in knowing how to go around.

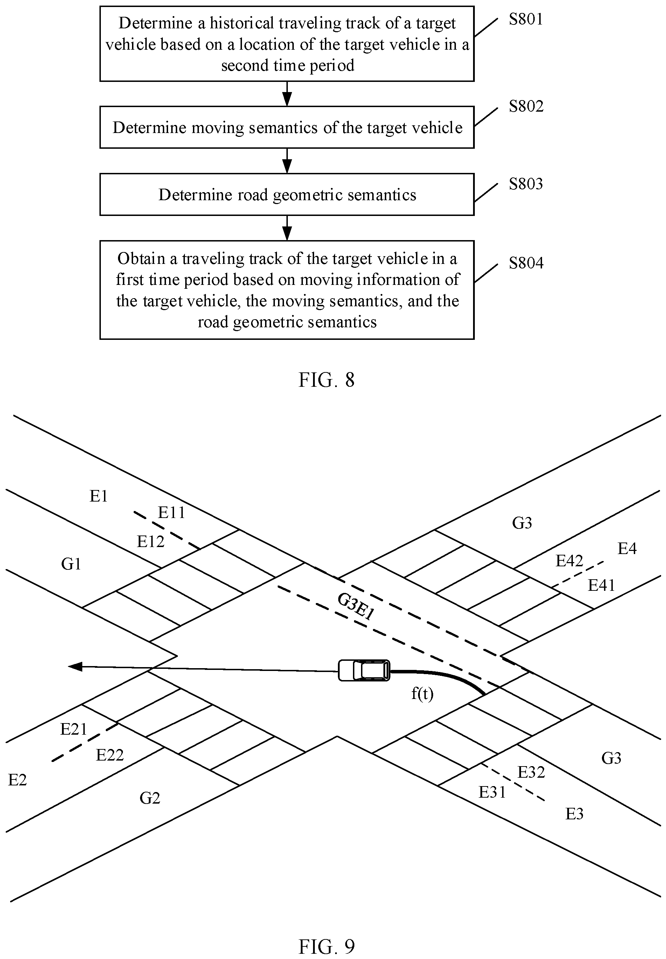

In some embodiments, the disclosed method may be implemented as a computer program instruction encoded on a computer-readable storage medium or encoded on another non-transitory medium or article in a machine readable format. FIG. 7 schematically shows a conceptual partial view of an example computer program product arranged according to at least some embodiments shown herein, and the example computer program product includes a computer program for executing a computer process on a computing device. In an embodiment, an example computer program product 700 is provided by using a signal bearing medium 701. The signal bearing medium 701 may include one or more program instructions 702. When being run by one or more processors, the one or more program instructions 702 may provide all or some of the functions described above for FIG. 1 to FIG. 7, or may provide all or some of functions described in subsequent embodiments. For example, refer to an embodiment shown in FIG. 8. One or more features of S801 to S804 may be borne by one or more instructions associated with the signal bearing medium 701. In addition, the program instruction 702 in FIG. 7 also describes an example instruction.

In some examples, the signal bearing medium 701 may include a computer-readable medium 703, for example, but not limited to, a hard disk drive, a compact disc (CD), a digital video disc (DVD), a digital tape, a memory, a read-only memory (read-only memory, ROM), a random access memory (random access memory, RAM), or the like. In some implementations, the signal bearing medium 701 may include a computer-recordable medium 704, such as but not limited to a memory, a read/write (R/W) CD, an R/W DVD, and the like. In some implementations, the signal bearing medium 701 may include a communication medium 705, such as but not limited to, a digital and/or analog communication medium (for example, an optical fiber cable, a waveguide, a wired communication link, and a wireless communication link). Thus, for example, the signal bearing medium 701 may be communicated by using the communication medium 705 in a wireless manner (for example, a wireless communication medium complying with the IEEE 802.11 standard or another transmission protocol). The one or more program instructions 702 may be, for example, a computer-executable instruction or a logical implementation instruction. In some examples, a computing device described for FIG. 1 to FIG. 7 may be configured to provide various operations, functions, or actions in response to the program instruction 702 that is communicated to the computing device by using one or more of the computer-readable medium 703, and/or the computer-recordable medium 704, and/or the communication medium 705. It should be understood that the arrangement described herein is merely used as an example. Therefore, it may be understood by a person skilled in the art that other arrangements and other elements (for example, machines, interfaces, functions, sequences, and groups of functions) can be used instead, and that some elements may be omitted together based on an expected result. In addition, many of the described elements are functional entities that can be implemented as discrete or distributed components, or implemented in any suitable combination at any suitable position in combination with another component.

To improve accuracy of determining a future traveling track of a surrounding vehicle passing through an intersection, so as to improve security of route planning of a vehicle and ensure that the vehicle safely passes through the intersection, an embodiment of this application provides a track prediction method. The method is performed by a vehicle with an autonomous driving function, or another device with a vehicle control function, or may be a vehicle with an autonomous driving function or a processor in another device with a vehicle control function, for example, the processor 161, the processor 301, and the processor 530 mentioned in FIG. 1 to FIG. 7. As shown in FIG. 8, the track prediction method includes steps S801 to S804.

S801: Determine a historical traveling track of a target vehicle based on a location of the target vehicle in a second time period.

Time corresponding to the target vehicle may include the second time period and a first time period. The second time period may be a period of time (for example, from a moment t to a moment t+T) from a moment (for example, the moment t) before a current moment to the current moment (for example, the moment t+T). The second time period may include the moment t and the moment t+T. The current moment may be time corresponding to a current location of the target vehicle. The first time period may be a period of time starting from a next moment of a moment (for example, the moment t+T) corresponding to the current location of the target vehicle, and the first time period may not include the time corresponding to the current location of the target vehicle. In other words, the second time period may be a historical time period corresponding to the target vehicle, and the first time period may be a future time period corresponding to the target vehicle.

For example, the historical traveling track may be a moving track of the target vehicle in a period of time (for example, from the moment t to the moment t+T) from the moment before the current moment to the current moment, and a future traveling track may be a moving track of the target vehicle in a period of time starting from the next moment of the current moment.

Optionally, fitting may be performed on the location of the target vehicle in the second time period by using a third-order polynomial, to obtain a curve equation describing the historical traveling track of the target vehicle, that is, the following formula (1):

$$f(t)=A*t^3+B*t^2+C*t+D \tag{1}$$

Herein, A, B, C, and D are third-order polynomial coefficients, and t is any moment in the second time period.

It should be noted that the location of the target vehicle may be a location in an east-north-up (east-north-up, ENU) coordinate system. Fitting is performed on the location of the target vehicle by using the foregoing formula (1), so that some jump points caused by external noise or detection instability can be removed. The determined historical traveling track excludes a location jump point of the target vehicle, so that accuracy of the historical traveling track can be improved.

Optionally, a moving direction of the target vehicle at the current moment may be determined based on a curve change trend of the historical traveling track.

As shown in FIG. 9, assuming that the historical traveling track of the target vehicle is f(t) shown in FIG. 9, the moving direction of the target vehicle at the current moment is a direction shown by an arrow in FIG. 9.

S802: Determine moving semantics of the target vehicle.

The moving semantics indicates a behavior of the target vehicle, and the behavior of the target vehicle includes turning left, going straight, turning right, or turning around. In other words, semantic abstraction is performed on the behavior of the target vehicle, to obtain information about that the target vehicle is going to turn left, go straight, turn right, or turn around or is turning left, going straight, turning right, or turning around.

In a possible design solution, the determining moving semantics of the target vehicle in S802 may include: determining the moving semantics of the target vehicle based on a first angle and/or a first distance.

The first angle is an included angle between a traveling direction corresponding to a first location and a first reference line, the first distance is a relative distance between the first location and the first reference line, the first reference line is perpendicular to a lane stop line of an entrance road, a direction of the first reference line is consistent with a traveling direction corresponding to the entrance road, and the first location is any location of the target vehicle in the historical traveling track.

It should be noted that the historical traveling track may include a traveling track of the target vehicle at the current moment, and the first location may be a location of the target vehicle at the current moment.

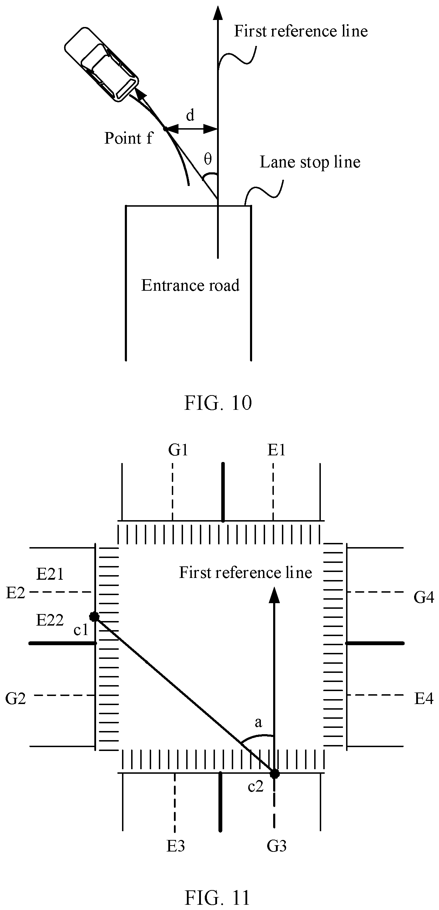

The following specifically describes the first angle and the first distance with reference to FIG. 10.

As shown in FIG. 10, for example, a location at a point f of the target vehicle in the historical traveling track is used as the first location. A tangent is made along a traveling direction of the target vehicle at the point f in the historical traveling track, an included angle θ between the tangent direction and the first reference line is the first angle, and a vertical distance d between the point f and the first reference line is the first distance.

It should be noted that an implementation of determining the first angle and the first distance is not limited in this application, provided that different moving semantics of the vehicle can be distinguished based on the first angle and/or the first distance.

Further, in a possible design solution, the determining the moving semantics of the target vehicle based on a first angle may include: if the first angle is greater than a first angle threshold and is less than or equal to a second angle threshold, determining that the moving semantics of the target vehicle is turning left; if an absolute value of the first angle is less than or equal to the first angle threshold, determining that the moving semantics of the target vehicle is going straight; if the first angle is less than a negative value of the first angle threshold, determining that the moving semantics of the target vehicle is turning right; and if the first angle is greater than the second angle threshold, determining that the moving semantics of the target vehicle is turning around.

Both the first angle threshold and the second angle threshold are angles biased toward the left side of the first reference line.

For example, the moving semantics of the target vehicle meets the following formula (2):

$$B_V = \begin{cases} \theta_2 \geq \theta > \theta_1 & \text{turning left} \\ |\theta| \leq \theta_1 & \text{going straight} \\ \theta < -\theta_1 & \text{turning right} \\ \theta > \theta_2 & \text{turning around} \end{cases} \tag{2}$$

Herein, Bv is the moving semantics of the target vehicle, $\theta$ is the first angle, $\theta_1$ is the first angle threshold, and $\theta_2$ is the second angle threshold. A direction coinciding with the first reference line is determined as 0 degrees, an angle biased toward the left side of the first reference line is determined as a positive angle, and an angle biased toward the right side of the first reference line is determined as a negative angle.

With reference to FIG. 10, it is assumed that the first angle threshold is set to 30 degrees, and the second angle threshold is set to 90 degrees. If the first angle $\theta$ is 40 degrees, moving semantics of the target vehicle at the point f is turning left.

Optionally, the first angle may be determined based on the first distance, and the first angle meets the following formula (3):

$$\theta = \sum\nolimits_{t=0}^{t+T} \frac{\partial d(t)}{\partial t} \tag{3}$$

Herein, t is a historical moment, T is a length of a selected historical track of the target vehicle, t+T is the current moment, d(t) is the first distance of the target vehicle at the moment t, $\frac{\partial d(t)}{\partial t}$ indicates a derivative of the first distance d(t) and time t, and $\Sigma$ indicates a sum of $\frac{\partial d(t)}{\partial t}$ from the moment t to the moment t+T.

S803: Determine road geometric semantics.

The road geometric semantics indicates a traveling rule that is of an exit road and/or a virtual lane included in an intersection at which the target vehicle is located and that is specified by using the entrance road as a reference, and the entrance road is an entrance of the intersection at which the target vehicle is located.

With reference to FIG. 9, it may be determined, based on the historical traveling track f(t) of the target vehicle, that the entrance road of the target vehicle is G3. It is determined, with reference to the entrance road G3, that exit roads of the target vehicle at the intersection are roads E1, E2, E3, and E4. The virtual lane is a lane connecting an entrance lane and an exit lane. For ease of viewing, FIG. 9 shows only a virtual lane G3E1. The virtual lane is used as an example. The entrance road G3 is used as a reference, and the virtual lane G3E1 is used by the target vehicle to go straight.

In this way, the road geometric semantics of the intersection at which the target vehicle is currently located is determined, and a problem of a difference between structures of different intersections is considered. This lays a foundation for improving accuracy of determining the future traveling track of the vehicle passing through the intersection.

In a possible design solution, before the road geometric semantics is determined in S803, the track prediction method provided in this embodiment of this application may further include step 1 to step 3.

Step 1: Query, based on a high-precision map or a related map interface, the intersection at which the target vehicle is currently located.

Step 2: Search for all related roads, lanes, and virtual lanes based on the intersection.

Step 3: Determine an intersection topology structure based on a connection relationship between the roads, the lanes, and the virtual lanes.

For example, the intersection topology structure may include an intersection number, an entrance road, an exit road, and a virtual lane. The entrance road may include a road number, an included lane, and a road sideline. The exit road may include a road number, an included lane, and a road sideline. The lanes included in the entrance road and the exit road each may include a lane number, a lane center line, and a lane width. The virtual lane may include a virtual lane number, a lane center line, an entrance lane, and an exit lane. The entrance lane may include a lane number, a lane center line, and a lane width. The exit lane may include a lane number, a lane center line, and a lane width.

In a possible design solution, the determining road geometric semantics in S803 may include: determining the road geometric semantics based on the entrance road and the intersection topology structure.

The road geometric semantics may include one or more of the following: A traveling rule of a road associated with the entrance road is turning left, a traveling rule of a road associated with the entrance road is turning right, a traveling rule of a road associated with the entrance road is going straight, and a traveling rule of a road associated with the entrance road is turning around. The road corresponding to turning left includes a left-turn exit lane and/or a virtual left-turn lane, the road corresponding to turning right includes a right-turn exit lane and/or a virtual right-turn lane, the road corresponding to going straight includes a straight exit lane and/or a virtual straight lane, and the road corresponding to turning around includes a turn-around exit lane and/or a virtual turn-around lane.

In other words, the road geometric semantics of the intersection may be determined based on the entrance road of the intersection at which the target vehicle is currently located and the intersection topology structure of the intersection at which the target vehicle is currently located. The intersection may be an intersection with any structure shape, for example, an intersection with a regular structure or intersections with different structures. Road geometric semantics of intersections with different structures can be accurately obtained, and applicability to intersections with different structures is strong.

With reference to FIG. 9, a traveling rule of the road E1 associated with the entrance road G3 is going straight, a traveling rule of the road E2 associated with the entrance road G3 is turning left, a traveling rule of the road E4 associated with the entrance road G3 is turning right, and a traveling rule of the road E3 associated with the entrance road G3 is turning around (it is assumed that turning around can be performed at this intersection according to a traffic rule). For example, the traveling rule is going straight. The road corresponding to going straight includes a straight exit lane E11, a straight exit lane E12, and a virtual straight lane G3E1. Certainly, at the intersection shown in FIG. 9, another virtual straight lane should be further included. For ease of viewing, the virtual straight lane is not shown in FIG. 9.

Optionally, the exit road (road) includes at least one exit lane (lane). In other words, the exit road may include one exit lane, or when the exit road used for codirectional traveling is divided by using a lane boundary, the exit road may include two or more exit lanes.

With reference to FIG. 9, the exit roads E1, E2, E3, and E4 each include one or more exit lanes. The exit road E1 includes a straight exit lane E11 and a straight exit lane E12, the exit road E2 includes a left-turn exit lane E21 and a left-turn exit lane E22, the exit road E3 includes a turn-around exit lane E31 and a turn-around exit lane E32, and the exit road E4 includes a right-turn exit lane E41 and a right-turn exit lane E42.

Specifically, the at least one exit lane may include one or more of a left-turn exit lane, a right-turn exit lane, a straight exit lane, and a turn-around exit lane. The virtual lane may include one or more of a virtual left-turn lane, a virtual right-turn lane, a virtual straight lane, and a virtual turn-around lane.

With reference to FIG. 9, the exit lane may include the straight exit lane E11, the straight exit lane E12, the left-turn exit lane E21, the left-turn exit lane E22, the turn-around exit lane E31, the turn-around exit lane E32, the right-turn exit lane E41, and the right-turn exit lane E42. The virtual lane shown in FIG. 9 includes the straight virtual lane G3E1. Certainly, at the intersection shown in FIG. 9, the virtual lane further includes a virtual straight lane corresponding to the straight exit lane E12, a virtual left-turn lane corresponding to the left-turn exit lane E21, a left-turn virtual lane corresponding to the left-turn exit lane E22, a virtual turn-around lane corresponding to the turn-around exit lane E31, a virtual turn-around lane corresponding to the turn-around exit lane E32, a virtual right-turn lane corresponding to the right-turn exit lane E41, and a virtual right-turn lane corresponding to the right-turn exit lane E42. For ease of viewing, these lanes not shown in FIG. 9.

It should be noted that the intersection shown in FIG. 9 is an intersection with a regular intersection structure. When the intersection is an intersection with an irregular structure, for example, a T-shaped intersection, a T-shaped intersection, a Y-shaped intersection, an X-shaped intersection, a staggered intersection, a ring-type intersection, or the like, the exit lane may include one or some of a left-turn exit lane, a right-turn exit lane, a straight exit lane, and a turn-around exit lane, the virtual lane may include one or some of a virtual left-turn lane, a virtual right-turn lane, a virtual straight lane, and a virtual turn-around lane. Details are not described in this application.

It should be understood that traveling rules of the road, the exit lane, and the virtual lane included in the intersection shown in FIG. 9 may be determined by using the method provided in this step. Details are not described again in this application.

Further, in a possible design solution, the determining the road geometric semantics based on the entrance road and the intersection topology structure may include: determining the road geometric semantics based on a second angle.

The second angle is an angle between the exit lane or the virtual lane and the entrance road, and the second angle may be determined based on the intersection topology structure.

With reference to FIG. 11, the second angle may be an included angle a between the first reference line and a connection line between a midpoint c1 of a lane stop line of the exit lane E22 and a midpoint c2 of a lane stop line of the entrance road. It should be noted that a specific method for determining the second angle is not limited in this application, provided that a traveling rule of each road and lane can be determined.

Further, in a possible design solution, the determining the road geometric semantics based on a second angle may include: if the second angle is greater than a third angle threshold and less than or equal to a fourth angle threshold, determining that the traveling rule of the exit lane or the virtual lane is turning left; if the absolute value of the second angle is less than or equal to the third angle threshold, determining that the traveling rule of the exit lane or the virtual lane is going straight; if the second angle is less than a negative value of the third angle threshold, determining that the traveling rule of the exit lane or the virtual lane is turning right; and if the second angle is greater than the fourth angle threshold, determining that the traveling rule of the exit lane or the virtual lane is turning around.

Both the third angle threshold and the fourth angle threshold are angles biased toward the left side of the first reference line.

For example, the road geometric semantics meets the following formula (4):

$$B_L = \begin{cases} \theta_4 \geq \alpha > \theta_3 & \text{turning left} \\ |\alpha| \leq \theta_3 & \text{going straight} \\ \alpha < -\theta_3 & \text{turning right} \\ \alpha > \theta_3 & \text{turning around} \end{cases} \tag{4}$$

Herein, $B_L$ is geometric semantics of the exit lane or the virtual lane, $\alpha$ is the second angle, $\theta_3$ is the third angle threshold, and $\theta_4$ is the fourth angle threshold. The direction coinciding with the first reference line is determined as 0 degrees, the angle biased toward the left side of the first reference line is determined as a positive angle, and the angle biased toward the right side of the first reference line is determined as a negative angle.

With reference to FIG. 11, it is assumed that the third angle threshold is set to 30 degrees, and the fourth angle threshold is set to 90 degrees. If the second angle $\alpha$ is 45 degrees, the traveling rule of the exit lane E22 is turning left.

It should be noted that the track prediction method provided in this embodiment of this application is not only applicable to a regular crossroad, but also applicable to any type of intersection, for example, a T-shaped intersection, a roundabout intersection, or a Y-shaped intersection. In addition, a value of the angle threshold may change according to a change of an intersection structure. The value of the angle threshold is not limited in this application.

S804: Obtain a traveling track of the target vehicle in the first time period based on moving information of the target vehicle, the moving semantics, and the road geometric semantics.

The moving information includes a moving direction of the target vehicle and the current location of the target vehicle, and the first time period is a period of time starting from the next moment of the moment corresponding to the current location of the target vehicle. For a specific implementation of the first time period, refer to S801.

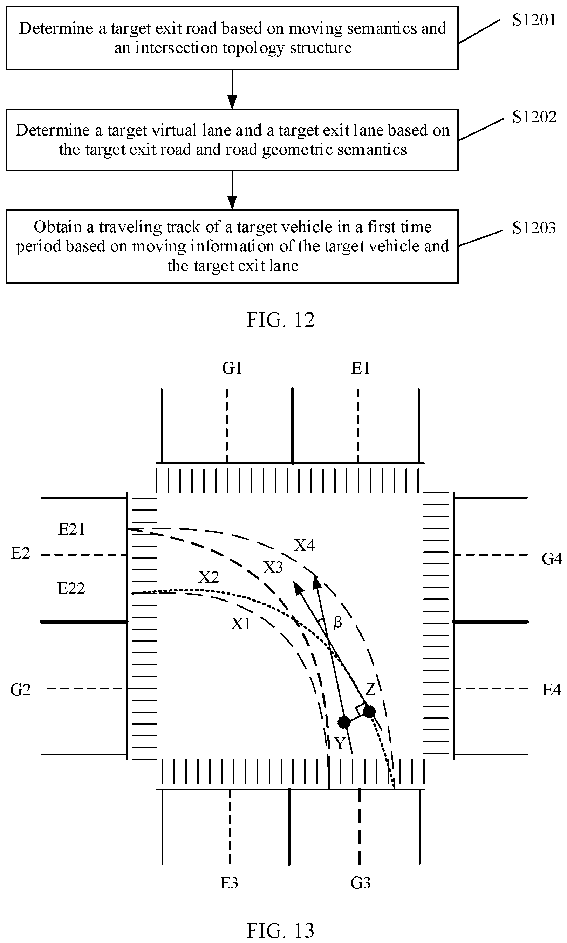

In a possible design solution, the obtaining a traveling track of the target vehicle in the first time period based on the moving information of the target vehicle, the moving semantics, and the road geometric semantics in S804 may include S1201 to S1203 shown in FIG. 12.

S1201: Determine a target exit road based on the moving semantics and the intersection topology structure.

In this step, the target exit road at a road layer may be determined from a plurality of exit roads. In the track prediction method in this application, a hierarchical reasoning manner is used. A road matching the moving semantics is first obtained, and then a lane matching the moving semantics is obtained. This can reduce operation complexity of a system, and improve working efficiency of the system.

In a possible design solution, the determining a target exit road based on the moving semantics and the intersection topology structure in S1201 may include step 4 and step 5.

Step 4: Determine at least one second candidate exit road from at least one first candidate exit road based on the historical traveling track.

Optionally, the at least one first candidate exit road is determined based on the intersection topology structure.

In other words, all exit roads of the target vehicle at the intersection, that is, the at least one first candidate exit road, may be determined based on the intersection topology structure determined in S803. Then, some more possible exit roads, that is, the at least one second candidate exit road, may be determined from all the exit roads of the target vehicle at the intersection based on the historical traveling track of the target vehicle.

With reference to FIG. 9, the at least one first candidate exit road may be the exit road E1, the exit road E2, the exit road E3, or the exit road E4. The moving direction of the target vehicle at the current moment, that is, the direction shown by the arrow in FIG. 9, is obtained based on the historical traveling track f(t) of the target vehicle. The moving direction of the target vehicle at the current moment is analyzed with reference to the intersection topology structure. The moving direction points to a direction between the exit road E1 and the exit road E2, so that the at least one second candidate exit road, that is, the exit road E1 and the exit road E2, may be obtained.

Step 5: Determine a third candidate exit road from the at least one second candidate exit road based on the moving semantics.

With reference to FIG. 9, it is assumed that the moving semantics of the target vehicle is turning left. In the at least one second candidate exit road, the traveling rule of the exit road E1 is going straight, and the traveling rule of the exit road E2 is turning left. The moving semantics of the target vehicle matches geometric semantics of the exit road E2, and both the moving semantics of the target vehicle and the geometric semantics of the exit road E2 are turning left. The exit road E2 in the at least one second candidate exit road may be determined as the third candidate exit road.

Optionally, the third candidate exit road is the target exit road.

With reference to FIG. 9, the selected exit road E2 is used as the target exit road. In this way, some possible exit roads are first selected from all the exit roads of the target vehicle at the intersection based on the historical traveling track, and finally, a most possible exit road, that is, the target exit road, is quickly and accurately determined from the possible exit roads based on the moving semantics of the target vehicle.

In step 4 to step 5, the target exit road is determined based on the moving semantics of the target vehicle at a single moment. Further, a final target exit road may be determined based on determining results at a plurality of historical moments, to improve accuracy of track prediction. In a possible design solution, the track prediction method in this application may further include step 6 to step 7.

Step 6: Obtain a result accumulation of the at least one first candidate exit road based on a first quantity of times and a first time deviation.

The first quantity of times is a quantity of times that the first candidate exit road is determined as the third candidate exit road in M historical moments. The first time deviation is a time deviation between a moment at which the first candidate exit road is determined as the third candidate exit road and the current moment.

With reference to FIG. 9, it is assumed that the first candidate exit road E2 is determined as the third candidate exit road at a historical moment t1. The first time deviation between the historical moment t1 and the current moment t is t-t1. It is assumed that the first candidate exit road E1 is determined as the third candidate exit road at a historical moment t2. The first time deviation between the historical moment t2 and the current moment t is t-t2.

Step 7: Determine the target exit road based on the result accumulation of the at least one first candidate exit road.

For example, the result accumulation may meet the following formula (5):

$$E_i = \sum\nolimits_{t-M}^{t} W(t) * e_i \qquad\qquad (5)$$

Herein, $E_i$ is the result accumulation, t is the current moment, M is the historical moment, $e_i$ indicates whether the first candidate exit road i exists in a single determining result, $e_i$ is 1 or 0, and $W(t)$ is a weight value of $e_i$.

$W(t)$ may be a time-related factor. For the current moment t, a larger time deviation between the historical moment and the current moment indicates a smaller value of a determining result at the historical moment. The time-related factor meets the following formula (6):

$$W(t) = \frac{1}{(t - t_i)^2} \qquad\qquad (6)$$

Herein, $t_i$ indicates a historical moment at which the first candidate exit road i exists in the single determining result. That is, a larger time deviation between the historical moment and the current moment indicates a smaller weight.

S1202: Determine a target virtual lane and a target exit lane based on the target exit road and the road geometric semantics.

In other words, after the target exit road at the road layer is determined in S1201, in this step, the target virtual lane and the target exit lane at a lane layer are further determined from one or more lanes corresponding to the target exit road, to implement hierarchical reasoning. This reduces operation complexity of the system, and improves accuracy of track prediction.

In a possible design solution, the determining a target virtual lane and a target exit lane based on the target exit road and the road geometric semantics in S1202 includes step 8 to step 10.

Step 8: Determine at least one first candidate virtual lane based on the target exit road and the intersection topology structure.

In other words, in this step, all virtual lanes related to the target exit road, that is, the at least one first candidate virtual lane, may be determined.

With reference to FIG. 13, assuming that the target exit road is E2, the entrance road is G3, and Y in FIG. 13 indicates the target vehicle, a virtual lane between the exit road E2 and the entrance road G3, that is, the at least one first candidate virtual lane, may include virtual lanes X1, X2, X3, and X4.

Step 9: Determine a second candidate virtual lane from the at least one first candidate virtual lane based on a first parameter.

The second candidate virtual lane is the target virtual lane, and the first parameter may include a second distance, a third angle, and a semantic matching result. The second distance is a distance between the target vehicle and a second location, the third angle is an included angle between the traveling direction of the target vehicle and a traveling direction corresponding to the second location, the semantic matching result is a matching result between geometric semantics of the first candidate virtual lane and the moving semantics, and the second location is a location at which the target vehicle vertically intersects a reference line of the first candidate virtual lane.

With reference to FIG. 13, the virtual lane X2 is used as an example. The second location is a point Z at which the target vehicle Y vertically intersects a reference line of the virtual lane X2, the second distance is a distance between the point Y and the point Z, and the third angle is β shown in FIG. 13. The semantic matching result may be 1 or 0. If the moving semantics is the same as the geometric semantics of the first candidate virtual lane, the semantic matching result is 1; otherwise, the semantic matching result is 0.

Step 10: Determine a first candidate exit lane based on the target virtual lane and the intersection topology structure.

Optionally, the first candidate exit lane is the target exit lane.

With reference to FIG. 13, it is assumed that the determined target virtual lane is the virtual lane X3, and it may be learned, based on the intersection topology structure, that an exit lane corresponding to the virtual lane X3 is E21. In this case, the first candidate exit lane is the exit lane E21, so that the target exit lane is E21.

Further, in a possible design solution, the determining a second candidate virtual lane from the at least one first candidate virtual lane based on a first parameter in step 9 may include step 11 to step 13.

Step 11: Determine at least one first score of the first candidate virtual lane based on at least one first ranking order of the at least one first candidate virtual lane.

The first ranking order is a ranking of the first candidate virtual lane according to each parameter in the first parameter.

In other words, the first candidate virtual lanes are sorted. For example, the first parameter is the second distance. With reference to FIG. 13, assuming that an ascending order of second distances between the target vehicle Y and the at least one first candidate virtual lane X1, X2, X3, and X4 are X3, X1, X2, and X4, the first ranking order of sorting the at least one first candidate virtual lane by the second distances is the first candidate virtual lanes X3, X1, X2, and X4.

With reference to FIG. 13, it is assumed that sizes of third angles between the target vehicle Y and the at least one first candidate virtual lane X1, X2, X3, and X4 are sequentially X3, X2, X1, and X4 in ascending order. In this case, a first ranking order of the at least one first candidate virtual lane at the third angle is the first candidate virtual lane X3, X1, X2, and X4.

With reference to FIG. 13, assuming that the moving semantics of the target vehicle Y is turning left, and geometric semantics of the at least one first candidate virtual lane X1, X2, X3, and X4 is also turning left, the first ranking order of the at least one first candidate virtual lane in the semantic matching result is 1.

Optionally, after the first ranking order is obtained, the first score $S_n$ of the at least one first candidate virtual lane according to each parameter n in the first parameter may be determined by using the following formula (7):

$$S_n = \frac{N_E - r_n}{N_E} \tag{7}$$

Herein, $r_n$ is a ranking of the first candidate virtual lane according to each parameter n in the first parameter, and $N_E$ is a quantity of the at least one first candidate virtual lane.

It should be noted that a formula for calculating the first score is not limited in this application, provided that a ranking order of the at least one first candidate virtual lane according to each parameter can be reflected.

Step 12: Perform weighted summation on the at least one first score to obtain a second score of the at least one first candidate virtual lane.

Optionally, a total score, that is, the second score $S_i$, of the at least one first candidate virtual lane in a plurality of parameters may be determined by using the following formula (8):

$$S_i = \sum_{n=1}^{N} W_n S_n \tag{8}$$

Herein, N is a quantity of parameters included in the first parameter, $W_n$ is a weight value of the first score $S_n$,

and $W_n$ may be determined based on confidence of a parameter in the first parameter, and is 1 by default.

For example, a signal from a global positioning system is used to determine a location of a vehicle. When the signal can be well received, confidence of a location parameter is high. When it is difficult to receive the signal due to a reason such as terrain, it is difficult to accurately determine the location of the vehicle, and confidence of the location parameter is low.

For example, with reference to FIG. 13, a second score $S_{X1}$ of the first candidate virtual lane X1, a second score $S_{X2}$ of the first candidate virtual lane X2, a second score Sxs of the first candidate virtual lane X3, and a second score $S_{X4}$ of the first candidate virtual lane X4 may be determined.

Step 13: Determine a second candidate virtual lane based on the second score of the at least one first candidate virtual lane.

Optionally, a first candidate virtual lane with a highest second score may be selected as the second candidate virtual lane based on the second score of the at least one first candidate virtual lane.

In step 8 to step 13, the target virtual lane and/or the target exit lane are/is determined based on the moving semantics of the target vehicle at the single moment. Similar to determining of the target exit road, the final target virtual lane and target exit lane may be determined based on the determining results at the plurality of historical moments, to improve accuracy of track prediction. In a possible design solution, the track prediction method in this application may further include step 14 to step 16.

Step 14: Obtain a result accumulation of the at least one first candidate virtual lane based on a first quantity of times and a first time deviation.

The first quantity of times is a quantity of times that the first candidate virtual lane is determined as the second candidate virtual lane at the M historical moments, and the first time deviation is a time deviation between a moment at which the first candidate virtual lane is determined as the second candidate virtual lane and the current moment.

For a specific implementation, refer to step 6. Details are not described herein again.

Step 15: Determine the target virtual lane based on the result accumulation of the at least one first candidate virtual lane.

For a specific implementation, refer to step 7. Details are not described herein again.

Step 16: Determine the first candidate exit lane based on the target virtual lane and the intersection topology structure.

Optionally, the first candidate exit lane may be the target exit lane.

In this way, the target virtual lane is accurately determined based on an evidence accumulation enhancement idea and determining results at a plurality of historical moments, and then the target exit lane is accurately determined based on the target virtual lane, to improve accuracy of track prediction.

S1203: Obtain the traveling track of the target vehicle in the first time period based on the moving information of the target vehicle and the target exit lane.

The first time period is a period of time starting from the next moment of the moment corresponding to the current location of the target vehicle. In other words, the traveling track of the target vehicle in the first time period is a future traveling track of the target vehicle. For a specific implementation of the first time period, refer to S801.

Actually, the target vehicle may not travel according to a virtual lane line in the high-precision map. In the conventional technology, the virtual lane line is used as a traveling track of the target vehicle passing through the intersection. As a result, accuracy of the determined future traveling track is poor. In this application, an equation, that is, the following formula (9), indicating the future traveling track of the target vehicle is generated based on the moving information of the target vehicle and the target exit lane in a third order Bessel fitting manner:

$$G(\beta) = (1-\beta)^3 * p_0 + 3 * \beta * (1-\beta)^2 * p_1 + 3 * \beta^2 * (1-\beta) * p_2 + \beta^3 * p_3 \qquad (9)$$

Herein, $\beta$ is a proportion value, $\beta \in [0,1]$, $G(\beta)$ indicates the future traveling track of the target vehicle, $p_0$ is the current location of the target vehicle, $p_3$ is a center point of a lane stop line of the target exit lane, $p_1$ is determined based on the current location $p_0$ of the target vehicle and the moving direction of the target vehicle, and $p_2$ is determined based on the center point $p_3$ of the lane stop line of the target exit lane and the moving direction of the target vehicle.

According to the track prediction method shown in FIG. 8, semantic abstraction is performed on the behavior of the target vehicle and road structure information to obtain the moving semantics of the target vehicle and the road geometric semantics, and then the traveling track, namely, the future traveling track, of the target vehicle in the first time period is obtained based on the moving information of the target vehicle, the moving semantics of the target vehicle at the intersection, and the road geometric semantics of the intersection. In this way, in this application, when traveling track prediction is performed, semantic abstraction is performed on the behavior of the target vehicle and the road structure information of the intersection at which the target vehicle is currently located. Regardless of an intersection with a regular structure or an intersection with an irregular structure, a traveling rule corresponding to the target vehicle at the intersection can be accurately determined in this application, so that a future traveling track of a surrounding vehicle passing through the intersection can be accurately predicted. This is highly applicable to intersections with different structures, can improve security of vehicle route planning, and ensures that the vehicle passes through the intersection safely.

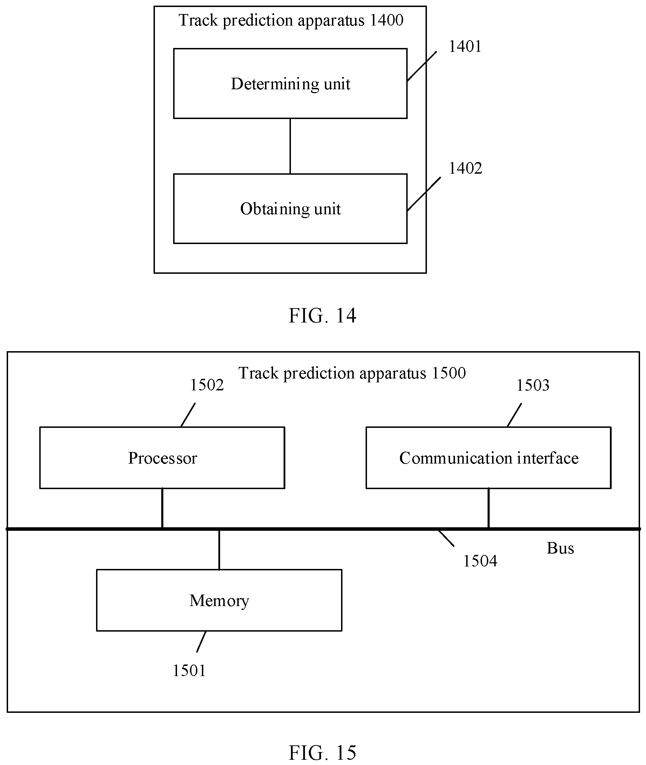

The track prediction method provided in embodiments of this application is described in detail above with reference to FIG. 8 to FIG. 13. The following describes in detail a track prediction apparatus provided in embodiments of this application with reference to FIG. 14 and FIG. 15.

In embodiments of this application, the track prediction apparatus may be divided into function modules based on the foregoing method examples. When each function module is obtained through division based on each corresponding function, FIG. 14 is a possible schematic diagram of a structure of the track prediction apparatus in the foregoing embodiments. The track prediction apparatus 1400 includes a determining unit 1401 and an obtaining unit 1402. Certainly, the track prediction apparatus may further include another module, or the track prediction apparatus may include fewer modules.

The determining unit 1401 is configured to determine moving semantics of a target vehicle. The moving semantics indicates a behavior of the target vehicle, and the behavior of the target vehicle includes turning left, going straight, turning right, or turning around.

The determining unit 1401 is further configured to determine road geometric semantics. The road geometric semantics indicates a traveling rule that is of an exit road and/or a virtual lane included in an intersection at which the target vehicle is located and that is specified by using an entrance road as a reference, and the entrance road is an entrance of the intersection at which the target vehicle is located.

The obtaining unit 1402 is configured to obtain a traveling track of the target vehicle in a first time period based on moving information of the target vehicle, the moving semantics, and the road geometric semantics. The moving information includes a moving direction of the target vehicle and a current location of the target vehicle, and the first time period is a period of time starting from a next moment of a moment corresponding to the current location of the target vehicle.

In a possible design solution, the determining unit 1401 is further configured to determine the moving semantics based on a first angle and/or a first distance. The first angle is an included angle between a traveling direction corresponding to a first location and a first reference line, the first distance is a relative distance between the first location and the first reference line, the first reference line is perpendicular to a lane stop line of the entrance road, a direction of the first reference line is consistent with a traveling direction corresponding to the entrance road, and the first location is any location of the target vehicle in a historical traveling track.

Optionally, the first angle may be determined based on the first distance.

In a possible design solution, the determining unit 1401 is further configured to: if the first angle is greater than a first angle threshold and is less than or equal to a second angle threshold, determine that the moving semantics of the target vehicle is turning left; if an absolute value of the first angle is less than or equal to the first angle threshold, determine that the moving semantics of the target vehicle is going straight; if the first angle is less than a negative value of the first angle threshold, determine that the moving semantics of the target vehicle is turning right; and if the first angle is greater than the second angle threshold, determine that the moving semantics of the target vehicle is turning around. Both the first angle threshold and the second angle threshold are angles biased toward the left side of the first reference line.

In a possible design solution, the determining unit 1401 is further configured to determine the road geometric semantics based on the entrance road and an intersection topology structure. The road geometric semantics includes one or more of the following: A traveling rule of a road associated with the entrance road is turning left, a traveling rule of a road associated with the entrance road is turning right, a traveling rule of a road associated with the entrance road is going straight, and a traveling rule of a road associated with the entrance road is turning around. The road corresponding to turning left includes a left-turn exit lane and/or a virtual left-turn lane, the road corresponding to turning right includes a right-turn exit lane and/or a virtual right-turn lane, the road corresponding to going straight includes a straight exit lane and/or a virtual straight lane, and the road corresponding to turning around includes a turn-around exit lane and/or a virtual turn-around lane. The exit road includes at least one exit lane, and the at least one exit lane includes one or more of the left-turn exit lane, the right-turn exit lane, the straight exit lane, and the turn-around exit lane. The virtual lane includes one or more of the virtual left-turn lane, the virtual right-turn lane, the virtual straight lane, and the virtual turn-around lane.

In a possible design solution, the determining unit 1401 is further configured to determine the road geometric semantics based on a second angle. The second angle is an angle between the exit lane or the virtual lane and the entrance road, and the second angle is determined based on the intersection topology structure.

In a possible design solution, the determining unit 1401 is further configured to: if the second angle is greater than a third angle threshold and less than or equal to a fourth angle threshold, determine that the traveling rule of the exit lane or the virtual lane is turning left; if the absolute value of the second angle is less than or equal to the third angle threshold, determine that the traveling rule of the exit lane or the virtual lane is going straight; if the second angle is less than a negative value of the third angle threshold, determine that the traveling rule of the exit lane or the virtual lane is turning right; and if the second angle is greater than the fourth angle threshold, determine that the traveling rule of the exit lane or the virtual lane is turning around. Both the third angle threshold and the fourth angle threshold are angles biased toward the left side of the first reference line.

In a possible design solution, the obtaining unit 1402 is further configured to: determine a target exit road based on the moving semantics and the intersection topology structure, determine a target virtual lane and a target exit lane based on the target exit road and the road geometric semantics, and obtain the traveling track of the target vehicle in the first time period based on the moving information of the target vehicle and the target exit lane.

In a possible design solution, the obtaining unit 1402 is further configured to: determine at least one second candidate exit road from at least one first candidate exit road based on the historical traveling track, and determine a third candidate exit road from the at least one second candidate exit road based on the moving semantics. The at least one first candidate exit road is determined based on the intersection topology structure, and the third candidate exit road is the target exit road.

In a possible design solution, the obtaining unit 1402 is further configured to: determine at least one first candidate virtual lane based on the target exit road and the intersection topology structure, determine a second candidate virtual lane from the at least one first candidate virtual lane based on a first parameter, and determine a first candidate exit lane based on the target virtual lane and the intersection topology structure. The second candidate virtual lane is the target virtual lane, and the first candidate exit lane is the target exit lane. The first parameter includes a second distance, a third angle, and a semantic matching result. The second distance is a distance between the target vehicle and a second location, the third angle is an included angle between the traveling direction of the target vehicle and a traveling direction corresponding to the second location, the semantic matching result is a matching result between geometric semantics of the first candidate virtual lane and the moving semantics, and the second location is a location at which the target vehicle vertically intersects a reference line of the first candidate virtual lane.

In a possible design solution, the obtaining unit 1402 is further configured to: determine at least one first score of the first candidate virtual lane based on at least one first ranking order of the at least one first candidate virtual lane, perform weighted summation on the at least one first score to obtain a second score of the at least one first candidate virtual lane, and determine the second candidate virtual lane based on the second score of the at least one first candidate virtual lane. The first ranking order is a ranking of the first candidate virtual lane according to each parameter in the first parameter.

In a possible design solution, the obtaining unit 1402 is further configured to obtain a result accumulation of the at least one first candidate exit road or the at least one first candidate virtual lane based on a first quantity of times and a first time deviation.

The first quantity of times is a quantity of times that the first candidate exit road is determined as a third candidate exit road in M historical moments, and the first time deviation is a time deviation between a moment at which the first candidate exit road is determined as the third candidate exit road and a current moment, or the first quantity of times is a quantity of times that the first candidate virtual lane is determined as a second candidate virtual lane in M historical moments, and the first time deviation is a time deviation between a moment at which the first candidate virtual lane is determined as the second candidate virtual lane and a current moment.

The determining unit 1401 is further configured to determine the target exit road, the target exit lane, or the target virtual lane based on the result accumulation of the at least one first candidate exit road or the at least one first candidate virtual lane.

In a possible design solution, the result accumulation meets the following relationship:

$$E_i = \sum\nolimits_{t-M}^{t} W(t) * e_i.$$

Herein, $E_i$ is a result accumulation of a first candidate exit road i or a first candidate virtual lane i, t is a current moment, M is a historical moment, $e_i$ indicates whether the first candidate exit road i or the first candidate virtual lane i exists in a single determining result, $e_i$ is 1 or 0, W(t) is a weight value of $e_i$, and W(t) meets the following relationship:

$$W(t) = \frac{1}{(t-t_i)^2},$$

where

t; indicates a historical moment at which the first candidate exit road i or the first candidate virtual lane i exists in the single determining result.

Optionally, the track prediction apparatus 1400 may further include a storage unit (not shown in FIG. 14), and the storage unit stores a program or instructions. When the determining unit 1401 or the obtaining unit 1402 executes the program or the instructions, the track prediction apparatus 1400 is enabled to perform the track prediction method in the foregoing method embodiments.

In addition, for technical effects of the track prediction apparatus 1400, refer to technical effects of the track prediction methods shown in FIG. 8 and FIG. 12. Details are not described herein again.

Refer to FIG. 15. This application further provides a lane line detection apparatus. A lane line detection apparatus 1500 includes a memory 1501, a processor 1502, a communication interface 1503, and a bus 1504. The processor 1502 is configured to manage and control an action of the apparatus, and/or is configured to perform another process of the technology described in the text. The communication interface 1503 is configured to support communication between the apparatus and another network entity. The memory 1501 is configured to store program code and data of the apparatus.

The processor 1502 (or described as a controller) may implement or execute various example logical blocks, units, unit modules, and circuits described with reference to content disclosed in this application. The processor or the controller may be a central processing unit, a general purpose processor, a digital signal processor, an application-specific integrated circuit, a field programmable gate array or another programmable logic device, a transistor logic device, a hardware component, or any combination thereof. The processor or the controller may implement or execute various example logical blocks, unit modules, and circuits described with reference to content disclosed in this application. Alternatively, the processor 1502 may be a combination of processors implementing a computing function, for example, a combination of one or more microprocessors, or a combination of the DSP and a microprocessor.

The communication interface 1503 may be a transceiver circuit.

The memory 1501 may include a volatile memory, for example, a random access memory. The memory may alternatively include a non-volatile memory, for example, a read-only memory, a flash memory, a hard disk, or a solid-state drive. The memory may alternatively include a combination of the foregoing types of memories.

The bus 1504 may be an extended industry standard architecture (extended industry standard architecture, EISA) bus or the like. The bus 1504 may be divided into an address bus, a data bus, a control bus, and the like. For ease of representation, only one thick line represents the bus in FIG. 15, but this does not mean that there is only one bus or only one type of bus.

For a detailed working process of the foregoing server or apparatus, refer to a corresponding process in the foregoing method embodiments. Details are not described herein again.

An embodiment of this application provides a computer-readable storage medium. The computer-readable storage medium includes a computer program or instructions. When the computer program or the instructions are run on a computer, the computer is enabled to perform the track prediction method in the foregoing method embodiments.

An embodiment of this application provides a computer program product, including a computer program or instructions. When the computer program or instructions are run on a computer, the computer is enabled to perform the track prediction method in the foregoing method embodiments.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and indicates that there may be three relationships. For example, A and/or B may indicate the following three cases: Only A exists, both A and B exist, and only B exists. A and B may be singular or plural. In addition, the character "/" in this specification usually indicates an "or" relationship between associated objects, or may indicate an "and/or" relationship. A specific meaning depends on the context.

In this application, at least one means one or more, and a plurality of means two or more. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A track prediction method, wherein the method comprises:

   determining moving semantics of a target vehicle, wherein the moving semantics indicates a behavior of the target vehicle, and the behavior of the target vehicle comprises: turning left, going straight, turning right, or turning around;
   determining road geometric semantics, wherein the road geometric semantics indicates a traveling rule that is of an exit road and/or a virtual lane comprised in an intersection at which the target vehicle is located and that is specified by using an entrance road as a reference, and the entrance road is an entrance of the intersection at which the target vehicle is located; and
   obtaining a traveling track of the target vehicle in a first time period based on moving information of the target vehicle, the moving semantics, and the road geometric semantics, wherein the moving information comprises a moving direction of the target vehicle and a current location of the target vehicle, and the first time period is a period of time starting from a next moment of a moment corresponding to the current location of the target vehicle.

2. The track prediction method according to claim 1, wherein the determining moving semantics of a target vehicle comprises:
   determining the moving semantics based on a first angle and/or a first distance, wherein the first angle is an included angle between a traveling direction corresponding to a first location and a first reference line, the first distance is a relative distance between the first location and the first reference line, the first reference line is perpendicular to a lane stop line of the entrance road, a direction of the first reference line is consistent with a traveling direction corresponding to the entrance road, and the first location is any location of the target vehicle in a historical traveling track.

3. The track prediction method according to claim 2, wherein the determining the moving semantics based on a first angle comprises:

   if the first angle is greater than a first angle threshold and less than or equal to a second angle threshold, determining that the moving semantics of the target vehicle is turning left, wherein both the first angle threshold and the second angle threshold are angles biased toward the left side of the first reference line;
   if an absolute value of the first angle is less than or equal to the first angle threshold, determining that the moving semantics of the target vehicle is going straight;
   if the first angle is less than a negative value of the first angle threshold, determining that the moving semantics of the target vehicle is turning right; and
   if the first angle is greater than the second angle threshold, determining that the moving semantics of the target vehicle is turning around.

4. The track prediction method according to any one of claims 1 to 3, wherein the determining road geometric semantics comprises:
   determining the road geometric semantics based on the entrance road and an intersection topology structure, wherein the road geometric semantics comprises one or more of the following: a traveling rule of a road associated with the entrance road is turning left, a traveling rule of a road associated with the entrance road is turning right, a traveling rule of a road associated with the entrance road is going straight, and a traveling rule of a road associated with the entrance road is turning around; the road corresponding to turning left comprises a left-turn exit lane and/or a virtual left-turn lane, the road corresponding to turning right comprises a right-turn exit lane and/or a virtual right-turn lane, the road corresponding to going straight comprises a straight exit lane and/or a virtual straight lane, and the road corresponding to turning around comprises a turn-around exit lane and/or a virtual turn-around lane; the exit road comprises at least one exit lane, and the at least one exit lane comprises one or more of the left-turn exit lane, the right-turn exit lane, the straight exit lane, and the turn-around exit lane; and the virtual lane comprises one or more of the virtual left-turn lane, the virtual right-turn lane, the virtual straight lane, and the virtual turn-around lane.

5. The track prediction method according to claim 4, wherein the determining the road geometric semantics based on the entrance road and an intersection topology structure comprises:

determining the road geometric semantics based on a second angle, wherein the second angle is an angle between the exit lane or the virtual lane and the entrance road, and the second angle is determined based on the intersection topology structure;
if the second angle is greater than a third angle threshold and less than or equal to a fourth angle threshold, determining that the traveling rule of the exit lane or the virtual lane is turning left, wherein both the third angle threshold and the fourth angle threshold are angles biased toward the left side of the first reference line;
if an absolute value of the second angle is less than or equal to the third angle threshold, determining that the traveling rule of the exit lane or the virtual lane is going straight;
if the second angle is less than a negative value of the third angle threshold, determining that the traveling rule of the exit lane or the virtual lane is turning right; and
if the second angle is greater than the fourth angle threshold, determining that the traveling rule of the exit lane or the virtual lane is turning around.

6. The track prediction method according to any one of claims 1 to 5, wherein the obtaining a traveling track of the target vehicle in a first time period based on moving information of the target vehicle, the moving semantics, and the road geometric semantics comprises:

determining a target exit road based on the moving semantics and the intersection topology structure;
determining a target virtual lane and a target exit lane based on the target exit road and the road geometric semantics; and
obtaining the traveling track of the target vehicle in the first time period based on the moving information of the target vehicle and the target exit lane.

7. The track prediction method according to claim 6, wherein the determining a target exit road based on the moving semantics and the intersection topology structure comprises:

determining at least one second candidate exit road from at least one first candidate exit road based on the historical traveling track, wherein the at least one first candidate exit road is determined based on the intersection topology structure; and
determining a third candidate exit road from the at least one second candidate exit road based on the moving semantics, wherein the third candidate exit road is the target exit road.

8. The track prediction method according to claim 6 or 7, wherein the determining a target virtual lane and a target exit lane based on the target exit road and the road geometric semantics comprises:

determining at least one first candidate virtual lane based on the target exit road and the intersection topology structure;
determining a second candidate virtual lane from the at least one first candidate virtual lane based on a first parameter, wherein the second candidate virtual lane is the target virtual lane, the first parameter comprises a second distance, a third angle, and a semantic matching result, the second distance is a distance between the target vehicle and a second location, the third angle is an included angle between a traveling direction of the target vehicle and a traveling direction corresponding to the second location, the semantic matching result is a matching result between geometric semantics of the first candidate virtual lane and the moving semantics, and the second location is a location at which the target vehicle vertically intersects a reference line of the first candidate virtual lane; and
determining a first candidate exit lane based on the target virtual lane and the intersection topology structure, wherein the first candidate exit lane is the target exit lane.

9. The track prediction method according to claim 8, wherein the determining a second candidate virtual lane from the at least one first candidate virtual lane based on a first parameter comprises:

determining at least one first score of the first candidate virtual lane based on at least one first ranking order of the at least one first candidate virtual lane, wherein the first ranking order is a ranking of the first candidate virtual lane according to each parameter in the first parameter;
performing weighted summation on the at least one first score to obtain a second score of the at least one first candidate virtual lane; and
determining the second candidate virtual lane based on the second score of the at least one first candidate virtual lane.

10. The track prediction method according to any one of claims 7 to 9, wherein the method further comprises:

obtaining a result accumulation of the at least one first candidate exit road or the at least one first candidate virtual lane based on a first quantity of times and a first time deviation, wherein
the first quantity of times is a quantity of times that the first candidate exit road is determined as a third candidate exit road in M historical moments, and the first time deviation is a time deviation between a moment at which the first candidate exit road is determined as the third candidate exit road and a current moment, or the first quantity of times is a quantity of times that the first candidate virtual lane is determined as the second candidate virtual lane in M historical moments, and the first time deviation is a time deviation between a moment at which the first candidate virtual lane is determined as the second candidate virtual lane and a current moment; and
determining the target exit road, the target exit lane, or the target virtual lane based on the result accumulation of the at least one first candidate exit road or the at least one first candidate virtual lane.

11. The track prediction method according to claim 10, wherein the result accumulation meets the following relationship:

$$E_i = \sum_{t-M}^{t} W(t) * e_i,$$

wherein

$E_i$ is the result accumulation of the first candidate exit road i or the first candidate virtual lane i, t is the current moment, M is a historical moment, $e_i$ indicates whether the first candidate exit road i or the first candidate virtual lane i exists in a single determining result, $e_i$ is 1 or 0, W(t) is a weight value of $e_i$, and W(t) meets the following relationship:

$$W(t) = \frac{1}{(t - t_i)^2},$$

wherein
$t_i$ indicates a historical moment at which the first candidate exit road i or the first candidate virtual lane i exists in the single determining result.

12. A track prediction apparatus, wherein the apparatus comprises a determining unit and an obtaining unit;

the determining unit is configured to determine moving semantics of a target vehicle, wherein the moving semantics indicates a behavior of the target vehicle, and the behavior of the target vehicle comprises: turning left, going straight, turning right, or turning around;
the determining unit is further configured to determine road geometric semantics, wherein the road geometric semantics indicates a traveling rule that is of an exit road and/or a virtual lane comprised in an intersection at which the target vehicle is located and that is specified by using an entrance road as a reference, and the entrance road is an entrance of the intersection at which the target vehicle is located; and
the obtaining unit is configured to obtain a traveling track of the target vehicle in a first time period based on moving information of the target vehicle, the moving semantics, and the road geometric semantics, wherein the moving information comprises a moving direction of the target vehicle and a current location of the target vehicle, and the first time period is a period of time starting from a next moment of a moment corresponding to the current location of the target vehicle.

13. The track prediction apparatus according to claim 12, wherein
the determining unit is further configured to determine the moving semantics based on a first angle and/or a first distance, wherein the first angle is an included angle between a traveling direction corresponding to a first location and a first reference line, the first distance is a relative distance between the first location and the first reference line, the first reference line is perpendicular to a lane stop line of the entrance road, a direction of the first reference line is consistent with a traveling direction corresponding to the entrance road, and the first location is any location of the target vehicle in a historical traveling track.

14. The track prediction apparatus according to claim 13, wherein

the determining unit is further configured to: if the first angle is greater than a first angle threshold and less than or equal to a second angle threshold, determine that the moving semantics of the target vehicle is turning left, wherein both the first angle threshold and the second angle threshold are angles biased toward the left side of the first reference line;
the determining unit is further configured to: if an absolute value of the first angle is less than or equal to the first angle threshold, determine that the moving semantics of the target vehicle is going straight;
the determining unit is further configured to: if the first angle is less than a negative value of the first angle threshold, determine that the moving semantics of the target vehicle is turning right; and
the determining unit is further configured to: if the first angle is greater than the second angle threshold, determine that the moving semantics of the target vehicle is turning around.

15. The track prediction apparatus according to any one of claims 12 to 14, wherein
the determining unit is further configured to determine the road geometric semantics based on the entrance road and an intersection topology structure, wherein the road geometric semantics comprises one or more of the following: a traveling rule of a road associated with the entrance road is turning left, a traveling rule of a road associated with the entrance road is turning right, a traveling rule of a road associated with the entrance road is going straight, and a traveling rule of a road associated with the entrance road is turning around; the road corresponding to turning left comprises a left-turn exit lane and/or a virtual left-turn lane, the road corresponding to turning right comprises a right-turn exit lane and/or a virtual right-turn lane, the road corresponding to going straight comprises a straight exit lane and/or a virtual straight lane, and the road corresponding to turning around comprises a turn-around exit lane and/or a virtual turn-around lane; the exit road comprises at least one exit lane, and the at least one exit lane comprises one or more of the left-turn exit lane, the right-turn exit lane, the straight exit lane, and the turn-around exit lane; and the virtual lane comprises one or more of the virtual left-turn lane, the virtual right-turn lane, the virtual straight lane, and the virtual turn-around lane.

16. The track prediction apparatus according to claim 15, wherein

the determining unit is further configured to determine the road geometric semantics based on a second angle, wherein the second angle is an angle between the exit lane or the virtual lane and the entrance road, and the second angle is determined based on the intersection topology structure;
the determining unit is further configured to: if the second angle is greater than a third angle threshold and less than or equal to a fourth angle threshold, determine that the traveling rule of the exit lane or the virtual lane is turning left, wherein both the third angle threshold and the fourth angle threshold are angles biased toward the left side of the first reference line;
the determining unit is further configured to: if an absolute value of the second angle is less than or equal to the third angle threshold, determine that the traveling rule of the exit lane or the virtual lane is going straight;
the determining unit is further configured to: if the second angle is less than a negative value of the third angle threshold, determine that the traveling rule of the exit lane or the virtual lane is turning right; and
the determining unit is further configured to: if the second angle is greater than the fourth angle threshold, determine that the traveling rule of the exit lane or the virtual lane is turning around.

17. The track prediction apparatus according to any one of claims 12 to 16, wherein

the obtaining unit is further configured to determine a target exit road based on the moving semantics and the intersection topology structure;
the obtaining unit is further configured to determine a target virtual lane and a target exit lane based on the target exit road and the road geometric semantics; and
the obtaining unit is further configured to obtain the traveling track of the target vehicle in the first time period based on the moving information of the target vehicle and the target exit lane.

18. The track prediction apparatus according to claim 17, wherein

the obtaining unit is further configured to determine at least one second candidate exit road from at least one first candidate exit road based on the historical traveling track, wherein the at least one first candidate exit road is determined based on the intersection topology structure; and

the obtaining unit is further configured to determine a third candidate exit road from the at least one second candidate exit road based on the moving semantics, wherein the third candidate exit road is the target exit road.

19. The track prediction apparatus according to claim 17 or 18, wherein

the obtaining unit is further configured to determine at least one first candidate virtual lane based on the target exit road and the intersection topology structure;

the obtaining unit is further configured to determine a second candidate virtual lane from the at least one first candidate virtual lane based on a first parameter, wherein the second candidate virtual lane is the target virtual lane, the first parameter comprises a second distance, a third angle, and a semantic matching result, the second distance is a distance between the target vehicle and a second location, the third angle is an included angle between a traveling direction of the target vehicle and a traveling direction corresponding to the second location, the semantic matching result is a matching result between geometric semantics of the first candidate virtual lane and the moving semantics, and the second location is a location at which the target vehicle vertically intersects a reference line of the first candidate virtual lane; and

the obtaining unit is further configured to determine a first candidate exit lane based on the target virtual lane and the intersection topology structure, wherein the first candidate exit lane is the target exit lane.

20. The track prediction apparatus according to claim 19, wherein

the obtaining unit is further configured to determine at least one first score of the first candidate virtual lane based on at least one first ranking order of the at least one first candidate virtual lane, wherein the first ranking order is a ranking of the first candidate virtual lane according to each parameter in the first parameter;

the obtaining unit is further configured to perform weighted summation on the at least one first score to obtain a second score of the at least one first candidate virtual lane; and

the obtaining unit is further configured to determine the second candidate virtual lane based on the second score of the at least one first candidate virtual lane.

21. The track prediction apparatus according to any one of claims 18 to 20, wherein

the obtaining unit is further configured to obtain a result accumulation of the at least one first candidate exit road or the at least one first candidate virtual lane based on a first quantity of times and a first time deviation, wherein

the first quantity of times is a quantity of times that the first candidate exit road is determined as a third candidate exit road in M historical moments, and the first time deviation is a time deviation between a moment at which the first candidate exit road is determined as the third candidate exit road and a current moment, or the first quantity of times is a quantity of times that the first candidate virtual lane is determined as a second candidate virtual lane in M historical moments, and the first time deviation is a time deviation between a moment at which the first candidate virtual lane is determined as the second candidate virtual lane and a current moment; and

the determining unit is further configured to determine the target exit road, the target exit lane, or the target virtual lane based on the result accumulation of the at least one first candidate exit road or the at least one first candidate virtual lane.

22. The track prediction apparatus according to claim 21, wherein the result accumulation meets the following relationship:

$$E_i = \sum_{t\text{-}M}^{t} W(t) * e_i,$$

wherein

$E_i$ is the result accumulation of the first candidate exit road i or the first candidate virtual lane i, t is the current moment, M is a historical moment, $e_i$ indicates whether the first candidate exit road i or the first candidate virtual lane i exists in a single determining result, $e_i$ is 1 or 0, W(t) is a weight value of $e_i$, and W(t) meets the following

relationship:

$$W(\mathrm{t}) = \frac{1}{(\mathrm{t}-\mathrm{t}_i)^2},$$

wherein

$t_i$ indicates a historical moment at which the first candidate exit road i or the first candidate virtual lane i exists in the single determining result.

23. A track prediction apparatus, wherein the apparatus comprises a processor and a memory, the memory is configured to store computer program instructions, and the processor runs the computer program instructions, so that the track prediction apparatus performs the track prediction method according to any one of claims 1 to 11.

24. A computer-readable storage medium, comprising computer instructions, wherein when the computer instructions are run by a processor, a track prediction apparatus is enabled to perform the track prediction method according to any one of claims 1 to 11.

25. A computer program product, wherein when the computer program product runs on a processor, a track prediction apparatus is enabled to perform the track prediction method according to any one of claims 1 to 11.

Vehicle 100

Travel system 110
- Engine 111
- Transmission apparatus 112
- Energy source 113
- Wheels 114

Sensor system 120
- Positioning system 121
- Inertial measurement unit 122
- Radar 123
- Laser radar 124
- Camera 125

Control system 130
- Steering system 131
- Throttle 132
- Braking unit 133
- Computer vision system 134
- Route control system 135
- Obstacle avoidance system 136

Peripheral devices 140
- Wireless communication system 141
- Vehicle-mounted computer 142
- Microphone 143
- Speaker 144

Processor 161

Instructions 1621

Data storage apparatus 162

Computer system 160

Power supply 150

User interface 170

FIG. 1

Target status estimation module 201 → Road structure information processing module 202 → Target lane inference module 203 → Predicted track generation module 204

FIG. 2

System memory 317

OS (operating System) 318

Shell (shell) 320

Kernel (kernel) 321

Application 319

Autonomous driving-related program 323

316

Hard disk drive

315

Hard disk drive interface

301

Processor

System bus 302

304

Bus bridge

305

303

Video adapter

Input/Output bus

306

Input/Output interface

311

Universal serial bus port

Network interface

312

324

Display

Input device

Multimedia tray

Transceiver

Sensor

322

309

307

308

Camera

310

Network (network)

314

313

Software deploying server

FIG. 3

FIG. 4

EP 4 163 173 A1

510

520 530 540 550 560

Server Processor Memory Instructions Data

Computer system 160

FIG. 5

35

Operating
environment 600

Cloud service center 620

Network 611

Vehicle 613

Vehicle 612

FIG. 6

Computer program product 700

Signal bearing medium 701

Program instruction 702

| Computer-readable medium 703 | Computer-recordable medium 704 | Communication medium 705 |

FIG. 7

Determine a historical traveling track of a target vehicle based on a location of the target vehicle in a second time period /  S801

Determine moving semantics of the target vehicle /  S802

Determine road geometric semantics /  S803

Obtain a traveling track of the target vehicle in a first time period based on moving information of the target vehicle, the moving semantics, and the road geometric semantics /  S804

FIG. 8

E1
E11
E12
G1
G3
E42    E4
E41
G3E1
f(t)
E21
E22
E2
G2
G3
E32
E31
E3

FIG. 9

First reference line

d

Point f

θ

Lane stop line

Entrance road

FIG. 10

G1        E1

E21

E2

E22

c1

G2

First reference line

G4

E4

a

c2

E3        G3

FIG. 11

Determine a target exit road based on moving semantics and an intersection topology structure ⟋ S1201

Determine a target virtual lane and a target exit lane based on the target exit road and road geometric semantics ⟋ S1202

Obtain a traveling track of a target vehicle in a first time period based on moving information of the target vehicle and the target exit lane ⟋ S1203

FIG. 12

FIG. 13

Track prediction apparatus 1400

Determining unit — 1401

Obtaining unit — 1402

FIG. 14

Track prediction apparatus 1500

1502 — Processor

1503 — Communication interface

1504 — Bus

Memory

1501

FIG. 15

| INTERNATIONAL SEARCH REPORT | International application No. |
|---|---|
| | **PCT/CN2021/101765** |

**A.    CLASSIFICATION OF SUBJECT MATTER**

B60W 30/095(2012.01)i

According to International Patent Classification (IPC) or to both national classification and IPC

**B.    FIELDS SEARCHED**

Minimum documentation searched (classification system followed by classification symbols)

B60W30

Documentation searched other than minimum documentation to the extent that such documents are included in the fields searched

Electronic data base consulted during the international search (name of data base and, where practicable, search terms used)

CNABS, VEN: 自动驾驶, 自主驾驶, 无人驾驶, 轨迹, 路口, 车道, 角度, 距离, 转弯, 左转, 右转, 直行, 调头, 掉头, automatic, trajectory , track, path, trace, locus, trail, crossing, intersection, junction, lane, roadway, angle, distance, turn, straight

**C.    DOCUMENTS CONSIDERED TO BE RELEVANT**

| Category* | Citation of document, with indication, where appropriate, of the relevant passages | Relevant to claim No. |
|---|---|---|
| X | CN 109878515 A (BAIDU ONLINE NETWORK TECHNOLOGY (BEIJING) CO., LTD.) 14 June 2019 (2019-06-14)<br>    description, pages 3-7, and figures 1-6 | 1, 12, 23-25 |
| A | EP 2642464 B1 (IFST-N IFSTTAR INST FR SCI & TECHNOLOGIES) 09 January 2019 (2019-01-09)<br>    entire document | 1-25 |
| A | CN 111016896 A (MANDO CORPORATION) 17 April 2020 (2020-04-17)<br>    entire document | 1-25 |
| A | JP 2019032712 A (PIONEER ELECTRONIC CORP.) 28 February 2019 (2019-02-28)<br>    entire document | 1-25 |
| A | JP 2000003500 A (CALSONIC CORP.) 07 January 2000 (2000-01-07)<br>    entire document | 1-25 |
| A | CN 105608927 A (TOYOTA JIDOSHA KABUSHIKI KAISHA) 25 May 2016 (2016-05-25)<br>    entire document | 1-25 |
| A | US 8990001 B2 (NISSAN NORTH AMERICA INC.) 24 March 2015 (2015-03-24)<br>    entire document | 1-25 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 September 2021** | **28 September 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/101765**

| Patent document cited in search report | | | Publication date (day/month/year) | Patent family member(s) | | | Publication date (day/month/year) |
|---|---|---|---|---|---|---|---|
| CN | 109878515 | A | 14 June 2019 | EP | 3709281 | A1 | 16 September 2020 |
| | | | | JP | 2020149678 | A | 17 September 2020 |
| | | | | US | 2020290651 | A1 | 17 September 2020 |
| | | | | KR | 20200110174 | A | 23 September 2020 |
| | | | | CN | 109878515 | B | 16 March 2021 |
| EP | 2642464 | B1 | 09 January 2019 | FR | 2988507 | B1 | 25 April 2014 |
| | | | | EP | 2642464 | A1 | 25 September 2013 |
| | | | | JP | 2013218678 | A | 24 October 2013 |
| | | | | FR | 2988507 | A1 | 27 September 2013 |
| | | | | KR | 20130108200 | A | 02 October 2013 |
| | | | | US | 2013253815 | A1 | 26 September 2013 |
| CN | 111016896 | A | 17 April 2020 | KR | 102132899 | B1 | 21 July 2020 |
| | | | | DE | 102019215403 | A1 | 09 April 2020 |
| | | | | KR | 20200044193 | A | 29 April 2020 |
| | | | | US | 2020108833 | A1 | 09 April 2020 |
| JP | 2019032712 | A | 28 February 2019 | None | | | |
| JP | 2000003500 | A | 07 January 2000 | None | | | |
| CN | 105608927 | A | 25 May 2016 | JP | 2016095697 | A | 26 May 2016 |
| | | | | JP | 6149846 | B2 | 21 June 2017 |
| | | | | EP | 3021305 | A2 | 18 May 2016 |
| | | | | EP | 3021305 | A3 | 31 August 2016 |
| | | | | US | 2016140847 | A1 | 19 May 2016 |
| | | | | CN | 105608927 | B | 14 December 2018 |
| | | | | KR | 101821862 | B1 | 24 January 2018 |
| | | | | US | 9514648 | B2 | 06 December 2016 |
| | | | | KR | 20160058042 | A | 24 May 2016 |
| | | | | EP | 3021305 | B1 | 04 September 2019 |
| US | 8990001 | B2 | 24 March 2015 | US | 2015032362 | A1 | 29 January 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010628162